(19) **Europäisches Patentamt / European Patent Office / Office européen des brevets**

(11) **EP 4 488 883 A1**

(12) **EUROPEAN PATENT APPLICATION**
published in accordance with Art. 153(4) EPC

(43) Date of publication:
**08.01.2025 Bulletin 2025/02**

(21) Application number: **23778255.2**

(22) Date of filing: **28.03.2023**

(51) International Patent Classification (IPC):
**G06N 3/08** (2023.01)

(52) Cooperative Patent Classification (CPC):
**G06N 3/08**

(86) International application number:
**PCT/CN2023/084530**

(87) International publication number:
**WO 2023/185890 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 CN 202210336391**

(71) Applicant: **Huawei Technologies Co., Ltd.**
**Shenzhen, Guangdong 518129 (CN)**

(72) Inventors:
• **WU, Jiajun**
  **Beijing 100191 (CN)**
• **SUN, Chengjian**
  **Beijing 100191 (CN)**
• **YANG, Chenyang**
  **Beijing 100191 (CN)**
• **WANG, Jian**
  **Shenzhen, Guangdong 518129 (CN)**
• **LI, Rong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **DATA PROCESSING METHOD AND RELATED APPARATUS**

(57) This application provides a data processing method and a related apparatus. The method includes: obtaining K-dimensional data, and inputting the K-dimensional data into a first machine learning model, to obtain a solution to a to-be-solved problem. The first machine learning model includes a first processing module and a second processing module. The second processing module is determined based on a constraint condition of the to-be-solved problem. The second processing module is configured to perform dimensional generalization on the K-dimensional data. The first processing module is obtained through training based on m-dimensional data. A value of m is irrelevant to a value of K, and K and m are positive integers. When the to-be-solved problem is solved, the second processing module that performs the dimensional generalization on the K-dimensional data is used, so that a dimensional generalization capability of the K-dimensional data can be enhanced. In addition, the first processing module obtained through pre-training based on the m-dimensional data is used, and the first processing module does not need to be retrained due to a dimension change of input data, so that accuracy of the solution to the to-be-solved problem can be ensured with low system overheads.

FIG. 7

## Description

### CROSS-REFERENCE TO RELATED APPLICATIONS

This application claims priority to Chinese Patent Application No. 202210336391.9, filed with the China National Intellectual Property Administration on March 31, 2022 and entitled "DATA PROCESSING METHOD AND RELATED APPARATUS", which is incorporated herein by reference in its entirety.

### TECHNICAL FIELD

This application relates to the field of neural networks, and in particular, to a data processing method and a related apparatus.

### BACKGROUND

Currently, an artificial intelligence (artificial intelligence, AI) technology has been applied to network layer-related problems (such as network optimization, mobility management, and resource allocation), physical layer related problems (such as channel coding and decoding, channel prediction, and a receiver), and the like in a wireless communication system.

When the AI technology is applied to the wireless communication system, a neural network may be trained based on a preset quantity of devices, to obtain a neural network for solving a to-be-solved problem. In some cases, a relationship between an output and an input of the to-be-solved problem changes with the quantity of devices. When the quantity of devices changes, if a neural network that is not retrained is still used, accuracy of a solution to the to-be-solved problem is low, and consequently a large performance loss of the system is generated. Therefore, a neural network usually needs to be retrained, or a plurality of models need to be pre-trained, to adapt to different quantities of devices, leading to a problem of high storage and processing overheads of the system.

### SUMMARY

Embodiments of this application provide a data processing method and a related apparatus, to ensure accuracy of a solution to a to-be-solved problem with low system overheads.

According to a first aspect, an embodiment of this application provides a data processing method, and the method may be applied to a first apparatus. The method includes: obtaining K-dimensional data, and inputting the K-dimensional data into a first machine learning model, to obtain a solution to a to-be-solved problem. The first machine learning model includes a first processing module and a second processing module. The second processing module is determined based on a constraint condition of the to-be-solved problem. The second processing module is configured to perform dimensional generalization on the K-dimensional data. The first processing module is obtained through training based on m-dimensional data. A value of m is irrelevant to a value of K, and K and m are positive integers.

In this embodiment of this application, when the to-be-solved problem is solved, the second processing module that performs the dimensional generalization on the K-dimensional data is used, so that a dimensional generalization capability of the K-dimensional data can be enhanced. In addition, the first processing module obtained through pre-training based on the m-dimensional data is used, and the first processing module does not need to be retrained due to a dimension change of input data, so that accuracy of the solution to the to-be-solved problem can be ensured with low system overheads.

In an optional implementation, the first apparatus may obtain the K-dimensional data through channel estimation. Optionally, the K-dimensional data is obtained by a terminal through channel estimation, and then the first apparatus receives the K-dimensional data from the terminal.

In an optional implementation, the foregoing to-be-solved problem does not have a dimensional generalization characteristic. When the to-be-solved problem does not have a dimensional generalization characteristic, the first processing module obtained through training based on the m-dimensional data is generalized to process the K-dimensional data. If the to-be-solved problem is solved based on the first processing module, accuracy of an obtained solution to the to-be-solved problem is low. Therefore, the to-be-solved problem is solved based on the first processing module obtained through pre-training and the second processing module that performs dimensional generalization on the K-dimensional data, so that the dimensional generalization capability of the K-dimensional data can be improved, to obtain an accurate solution.

In an optional implementation, the inputting the K-dimensional data into a first machine learning model, to obtain a solution to a to-be-solved problem includes: inputting the K-dimensional data into the first processing module to obtain K first intermediate solutions; and inputting the K first intermediate solutions into the second processing module to obtain the solution to the to-be-solved problem.

It can be learned that, when the to-be-solved problem is solved, the K-dimensional data is input into the pre-trained first processing module to obtain the K first intermediate solutions, and then the second processing module that performs dimensional generalization performs dimensional generalization on the K first intermediate solutions, to implement the dimensional generalization on the K-dimensional data, so that the solution to the to-be-solved problem can be more accurate.

In an optional implementation, the to-be-solved problem is about power at which one network device sends a communication signal to K terminals when a total bandwidth at which the network device communicates with the K terminals is minimized. The constraint condition of the to-be-solved problem includes that total power at which the network device sends the communication signal to the K terminals falls within a first range. In other words, the to-be-solved problem is a problem about allocation of power at which one network device sends a communication signal to K terminals when the network device performs downlink communication with the K terminals.

In an optional implementation, the to-be-solved problem is about power at which K terminals send communication signals to one network device when a total bandwidth at which the K terminals communicate with the network device is minimized. The constraint condition of the to-be-solved problem includes that total power at which the K terminals send the communication signals to the network device falls within a third range. In other words, the to-be-solved problem is a problem about allocation of power at which K terminals send communication signals to one network device when the K terminals perform uplink communication with the network device.

In an optional implementation, when the to-be-solved problem is the foregoing problem about power allocation for uplink or downlink communication between K terminals and one network device, the second processing module includes a normalized exponential function activation layer. In other words, when the first apparatus solves the power allocation problem, the dimensional generalization is performed on the K-dimensional data by using the normalized exponential function activation layer.

In another optional implementation, the to-be-solved problem is about a bandwidth at which one network device communicates with K terminals when a total bandwidth at which the network device communicates with the K terminals is minimized. The constraint condition of the to-be-solved problem includes that quality of service of communication between the network device and each of the K terminals falls within a second range. In other words, the to-be-solved problem is a problem about allocation of a bandwidth at which one network device performs uplink communication or downlink communication with K terminals.

In an optional implementation, when the to-be-solved problem is the problem about allocation of a bandwidth at which one network device performs uplink communication or downlink communication with K terminals, the second processing module includes an activation layer and a scaling factor layer. A $k^{th}$ scaling factor in the scaling factor layer is obtained by inputting a $k^{th}$ piece of data and K into a scaling factor calculation module; and k is a positive integer less than or equal to K. It can be learned that, when the bandwidth allocation problem is solved, the dimensional generalization is performed on the K-dimensional data by using the activation layer and the scaling factor layer.

In an optional implementation, when the to-be-solved problem is the problem about allocation of a bandwidth at which one network device performs uplink communication or downlink communication with K terminals, the inputting the K first intermediate solutions into the second processing module to obtain the solution to the to-be-solved problem includes: inputting the K first intermediate solutions into the activation layer, to obtain K second intermediate solutions; and inputting the K second intermediate solutions into the scaling factor layer, to obtain the solution to the to-be-solved problem.

It can be learned that after the K first intermediate solutions are obtained based on the pre-trained first processing module, dimensional generalization is performed on the K first intermediate solutions sequentially based on the activation layer and the scaling factor layer, to obtain the solution to the bandwidth allocation problem.

In an optional implementation, when the to-be-solved problem is the foregoing power allocation problem or bandwidth allocation problem, the K-dimensional data is channel gains between the network device and the K terminals. The K channel gains may be obtained by the first apparatus through channel estimation.

In an optional implementation, the first processing module is a permutation equivalence neural network or a graph neural network having a permutation equivalence characteristic. In this implementation, the first processing module may be used when the first apparatus solves a to-be-solved problem having a permutation equivalence characteristic.

According to a second aspect, this application further provides a communication apparatus. The communication apparatus has some or all functions of implementing the first apparatus of the first aspect. For example, functions of the communication apparatus may include functions in some or all embodiments of the first apparatus according to the first aspect of this application, or may include a function of separately implementing any embodiment of this application. The functions may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are essential for the communication apparatus.

In an implementation, the communication apparatus includes a processing unit and a communication unit, and the communication unit is configured to receive and send data/signaling.

The processing unit is configured to obtain K-dimensional data.

The processing unit is further configured to input the K-dimensional data into a first machine learning model, to obtain a solution to a to-be-solved problem, where the first machine learning model includes a first processing module and a second processing module.

The second processing module is determined based on a constraint condition of the to-be-solved problem; the second processing module is configured to perform dimensional generalization on the K-dimensional data; the first processing module is obtained through training based on m-dimensional data; a value of m is irrelevant to a value of K; and K and m are positive integers.

In addition, for another optional implementation of the communication apparatus in this aspect, refer to related content of the first aspect. Details are not described herein again.

In an example, the communication unit may be a transceiver or a communication interface, the storage unit may be a memory, and the processing unit may be a processor.

In an implementation, the communication apparatus includes a processor and a transceiver, and the transceiver is configured to receive and send data/signaling.

The processor is configured to obtain K-dimensional data.

The processor is further configured to input the K-dimensional data into a first machine learning model, to obtain a solution to a to-be-solved problem, where the first machine learning model includes a first processing module and a second processing module.

The second processing module is determined based on a constraint condition of the to-be-solved problem; the second processing module is configured to perform dimensional generalization on the K-dimensional data; the first processing module is obtained through training based on m-dimensional data; a value of m is irrelevant to a value of K; and K and m are positive integers.

In addition, for another optional implementation of an uplink communication apparatus in this aspect, refer to related content of the first aspect. Details are not described herein again.

In another implementation, the communication apparatus is a chip or a chip system. The processing unit may alternatively be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be respectively disposed on chips that are independent of each other, or at least some or all of the components may be disposed on a same chip. For example, the processor may be divided into an analog baseband processor and a digital baseband processor. The analog baseband processor and the transceiver may be integrated on a same chip, and the digital baseband processor may be disposed on an independent chip. With continuous development of an integrated circuit technology, increasingly more components may be integrated on a same chip. For example, the digital baseband processor and a plurality of application processors (for example, but not limited to, a graphics processing unit and a multimedia processor) may be integrated on a same chip. The chip may be referred to as a system on a chip (system on a chip, SoC). Whether the components are separately disposed on different chips or integrated and disposed on one or more chips usually depends on a requirement of a product design. Embodiments of this application imposes no limitation on specific implementations of the foregoing components.

According to a third aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the information, the processor outputs the information to a transceiver, so that the transceiver transmits the information. After the information is output by the processor, other processing may further need to be performed on the information before the information arrives at the transceiver. Similarly, when the processor receives the foregoing inputted information, the transceiver receives the information, and inputs the information into the processor. Further, after the transceiver receives the foregoing information, other processing may need to be performed on the information and then the information is input into the processor.

Unless otherwise specified, operations such as sending and receiving related to the processor may be more generally understood as operations such as output, receiving, and input of the processor, not sending and receiving operations directly performed by a radio frequency circuit and an antenna, if the operations do not conflict with actual functions or internal logic of the operations in related descriptions.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (Read-Only Memory, ROM). The memory and the processor may be integrated on a same chip, or may be disposed on different chips respectively. A type of the memory and a manner of disposing the memory and the processor are not limited in embodiments of this application.

According to a fourth aspect, this application further provides a communication system. The system includes one or more network devices and one or more terminal devices. In another possible design, the system may further include another device that interacts with the network device and the terminal device.

According to a fifth aspect, this application provides a computer-readable storage medium, configured to store instructions, and when the instructions are run by a computer, the method according to any one of the implementations of the first aspect is implemented.

According to a sixth aspect, this application further provides a computer program product including instructions. When the computer program product runs on a computer, the method according to any one of the implementations of the first aspect is implemented.

According to a seventh aspect, this application provides a chip system. The chip system includes a processor and an interface. The interface is configured to obtain a program or instructions, and the processor is configured to invoke the program or the instructions to implement or support a first apparatus in implementing a function in the first aspect, for example, determining or processing at least one of data and information in the foregoing method. In a possible design, the chip system further includes a memory. The memory is configured to store program instructions and data that are essential for a terminal. The chip system may include a chip, or may include a chip and another discrete component.

## BRIEF DESCRIPTION OF DRAWINGS

FIG. 1 is a diagram of a system structure of a communication system according to an embodiment of this application;
FIG. 2 is a diagram of a structure of a fully-connected neural network according to an embodiment of this application;
FIG. 3 is a diagram of a neural network training manner according to an embodiment of this application;
FIG. 4 is a diagram of gradient backpropagation according to an embodiment of this application;
FIG. 5 is a diagram of a dimensional generalization characteristic according to an embodiment of this application;
FIG. 6 is a diagram of a structure of a deep neural network according to an embodiment of this application;
FIG. 7 is a schematic flowchart of a data processing method according to an embodiment of this application;
FIG. 8 is a diagram of a structure of a first machine learning model according to an embodiment of this application;
FIG. 9 is a schematic flowchart of another data processing method according to an embodiment of this application;
FIG. 10 is a diagram of a structure of another first machine learning model according to an embodiment of this application;
FIG. 11 is a schematic flowchart of still another data processing method according to an embodiment of this application;
FIG. 12 is a diagram of a structure of still another first machine learning model according to an embodiment of this application;
FIG. 13 is a diagram of a structure of a scaling factor calculation module according to an embodiment of this application;
FIG. 14 is a diagram of a structure of a communication apparatus according to an embodiment of this application;
FIG. 15 is a diagram of a structure of another communication apparatus according to an embodiment of this application; and
FIG. 16 is a diagram of a structure of a chip according to an embodiment of this application.

## DESCRIPTION OF EMBODIMENTS

The following clearly describes the technical solutions in embodiments of this application with reference to the accompanying drawings in embodiments of this application.

I. Communication system

To better understand a data processing method disclosed in embodiments of this application, a communication system applicable to embodiments of this application is described.

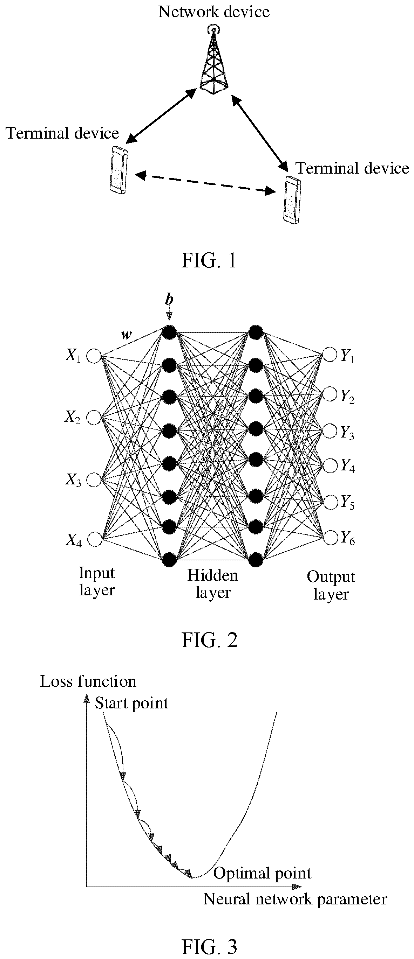

Embodiments of this application may be applied to a 5th generation mobile communication (5th generation mobile

communication, 5G) system, a satellite communication system, a short-distance wireless communication system, and the like. A system architecture is shown in FIG. 1. The wireless communication system may include one or more network devices and one or more terminal devices. The wireless communication system may also perform point-to-point communication. For example, a plurality of terminal devices communicate with each other.

It may be understood that the wireless communication system mentioned in embodiments of this application includes but is not limited to a narrow band- internet of things (narrow band-internet of things, NB-IoT) system, a long term evolution (long term evolution, LTE) system, three application scenarios of a 5G mobile communication system: enhanced mobile broadband (enhanced mobile broadband, eMBB), ultra reliable low latency communication (ultra reliable low latency communication, URLLC), and massive machine type of communication (massive machine type of communication, mMTC), a wireless fidelity (wireless fidelity, Wi-Fi) system, a mobile communication system after 5G, or the like.

In embodiments of this application, the network device is a device having a wireless transceiver function, is configured to communicate with the terminal device, and may be an evolved NodeB (evolved NodeB, eNB or eNodeB) in LTE, a base station in a 5G network or a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a device for implementing a base station function in the future, an access node in a Wi-Fi system, a transmission and reception point (transmission and reception point, TRP), a transmission point (transmission point, TP), a mobile switching center, devices that perform base station functions in device-to-device (device-to-device, D2D), vehicle-to-everything (vehicle-to-everything, V2X), and machine-to-machine (machine-to-machine, M2M) communications, and the like. This is not specifically limited in embodiments of this application.

The network device may communicate and interact with a core network device, to provide a communication service for the terminal device. The core network device is, for example, a device in a 5G core network (core network, CN). As a bearer network, the core network provides an interface to a data network, provides communication connection, authentication, management, and policy control for a terminal, and bearers a data service.

The terminal device in embodiments of this application may include various handheld devices, vehicle-mounted devices, wearable devices, or computing devices that have a wireless communication function, or other processing devices connected to a wireless modem. The terminal device may also be referred to as a terminal. The terminal device may alternatively be user equipment (user equipment, UE), an access terminal, a subscriber unit (subscriber unit), a user agent, a cellular phone (cellular phone), a smartphone (smartphone), a wireless data card, a personal digital assistant (personal digital assistant, PDA) computer, a tablet computer, a wireless modem (modem), a handset (handset), a laptop computer (laptop computer), a machine type communication (machine type communication, MTC) terminal, a communication device on a high-altitude aircraft, a wearable device, an uncrewed aerial vehicle, a robot, a terminal in device-to-device (device-to-device, D2D) communication, a terminal in vehicle to everything (vehicle to everything, V2X) communication, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), and a wireless terminal in a smart city (smart city), a wireless terminal in a smart home (smart home), a terminal device in a future communication network, or the like. This is not limited in this application.

In embodiments of this application, the terminal device may further have an AI processing capability, and the network device may also have an AI processing capability. For example, the terminal device may have a training capability, an inference capability, and the like of a neural network.

The first apparatus in embodiments of this application may be the foregoing network device, or may be the foregoing terminal device. In other words, the network device or the terminal device may perform the data processing method provided in embodiments of this application. Optionally, the first apparatus is a device other than the network device and the terminal device. When the first apparatus is a device other than the network device and the terminal device, the first apparatus performs the data processing method provided in embodiments of this application, to obtain a solution to a to-be-solved problem, and then sends the solution to the to-be-solved problem to the network device or the terminal device.

The optimal in embodiments of this application is optimal under a specific condition. For example, in embodiments of this application, "an optimal resource allocation strategy" is "an optimal resource allocation strategy under a specific condition".

In embodiments of this application, a "power allocation problem" is equivalent to a "power allocation strategy", and a "bandwidth allocation problem" is equivalent to a "bandwidth allocation strategy".

In embodiments disclosed in this application, all aspects, embodiments, or features of this application are presented with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

II. Related concepts

To better understand a data processing method disclosed in embodiments of this application, related concepts in embodiments of this application are briefly described.

1. Fully-connected neural network and neural network training

The fully-connected neural network is also referred to as a multilayer perceptron (multilayer perceptron, MLP). As shown in FIG. 2, one MLP includes one input layer, one output layer, and a plurality of hidden layers, and each layer includes a plurality of nodes. The node is referred to as a neuron. Neurons at two adjacent layers are connected to each other.

For the neurons at the two adjacent layers, an output $h$ of a neuron at a lower layer is a value obtained by applying an activation function to a weighted sum of all neurons x at an upper layer that are connected to the neuron at the lower layer. The output h of the neuron at the lower layer may be represented by using a matrix as:

$$\boldsymbol{h} = f(wx + \boldsymbol{b}) \quad (1)$$

$w$ is a weight matrix, $\boldsymbol{b}$ is an offset vector, and $\boldsymbol{f}$ is the activation function. In this case, an output of the neural network may be recursively represented as:

$$\boldsymbol{y} = f_n(w_n f_{n-1}(...) + \boldsymbol{b}_n) \quad (2)$$

In other words, the neural network may be understood as a mapping relationship from an input data set to an output data set.

The neural network training is a process of obtaining, by using existing data, the mapping relationship of Formula (2) based on random $\boldsymbol{w}$ and $\boldsymbol{b}$. As shown in FIG. 3, a specific manner of the neural network training is to evaluate an output result of the neural network by using a loss function (loss function), perform backpropagation on an error, and iteratively optimize $\boldsymbol{w}$ and $\boldsymbol{b}$ based on a gradient descent method until the loss function reaches a minimum value.

A gradient descent process may be represented as:

$$\boldsymbol{\theta} - \eta \frac{\partial L}{\partial \boldsymbol{\theta}} \to \boldsymbol{\theta} \quad (3)$$

$\theta$ is a to-be-optimized parameter. For example, $\theta$ is w and $\boldsymbol{b}$. $L$ is the loss function. $\eta$ is learning efficiency and is for controlling a gradient descent step.

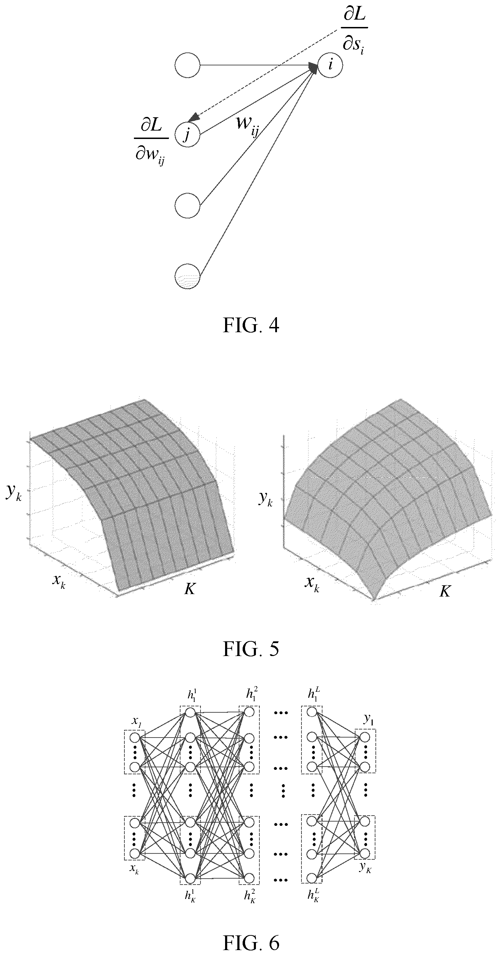

A chain rule for obtaining a partial derivative is used in a backpropagation process. To be specific, a gradient of a parameter of a previous layer may be recursively calculated from a gradient of a parameter of a subsequent layer. As shown in FIG. 4, a gradient of a weight $w_{ij}$ between a neuron $j$ and a neuron $i$ in FIG. 4 may be represented as:

$$\frac{\partial L}{\partial w_{ij}} = \frac{\partial L}{\partial s_i} \frac{\partial s_i}{\partial w_{ij}} \quad (4)$$

$s_i$ is an input weighted sum on the neuron $i$. It can be learned from Formula (4) that the gradient of the weight $w_{ij}$ between the neuron $j$ and the neuron $i$ is determined based on a gradient $\dfrac{\partial s_i}{\partial w_{ij}}$ of the neuron $i$.

2. Permutation equivalence (permutation equivalence, PE)

It is assumed that $X = [x_1, x_2,..., x_k]$, if an equation is $Y = f(X) = [y_1, y_2,..., y_k]$, and for any permutation $\pi(k) = p_k$ and $\check{X} = |x_{p1}, x_{p2},...,x_{pk}|$, $\check{Y} = f(\check{X}) = [y_{p1}, x_{p2},...y_{pk}]$, the function $f$ is permutation equivariant for $\mathbf{X}$. In other words, when a variable position of the function $f$ changes, an output of the function $f$ also changes with the variable position. In this case, the function $f$ is permutation equivariant.

Neural networks having permutation equivalence characteristics include a permutation equivalence network (permutation equivalence neural network, PENN) and a graph neural network (graph neural network, GNN). If a multivariable function represents a strategy that is irrelevant to an order in which objects are arranged, the strategy is referred to as a permutation equivalence strategy.

### 3. Dimensional generalization characteristic

As shown in a left figure in FIG. 5, the dimensional generalization characteristic is a characteristic that a relationship between an output $y_k$ and an input $x_k$ remains unchanged when a quantity $K$ of variables changes. It may be understood that, when the quantity (dimension) K of input data of a to-be-solved problem changes, the relationship between the output $y_k$ and the input $x_k$ remains unchanged. In this case, the to-be-solved problem may be referred to as having a dimensional generalization characteristic.

However, as shown in a right figure in FIG. 5, as a quantity $K$ of variables changes, a relationship between an output $y_k$ and an input $x_k$ changes. In this case, a to-be-solved problem represented by the right figure does not have a dimensional generalization characteristic.

### 4. Problem optimizing-based radio resource allocation

The problem optimizing-based radio resource allocation refers to how to implement optimal resource allocation for a plurality of terminals under a specific constraint condition. For example, for a radio resource allocation problem for K terminals and with a permutation equivalence characteristic, a model of the radio resource allocation problem is:

$$\max_{P} \; J(\boldsymbol{h}, \boldsymbol{P}) \\ C(\boldsymbol{h}, \boldsymbol{P}) \le 0 \qquad (5)$$

$\boldsymbol{P} \triangleq [p_1, \ldots, p_k]$ is a resource allocation strategy, $\boldsymbol{h} \triangleq [h_1, \ldots, h_k]$ is an environment status, $p_k$ and $h_k$ respectively represent a resource allocation strategy and an environment status of a terminal $k$, and C(-) represents a constraint. An optimal resource allocation strategy $\boldsymbol{P}^*$ in the resource allocation problem may be considered as a function of the environment status $\boldsymbol{h}$. An optimal strategy of each terminal in $\boldsymbol{P}^*$ changes as an environment status of each terminal in $\boldsymbol{h}$ changes. Therefore, the resource allocation strategy has the foregoing permutation equivalence characteristic.

### 5. Artificial intelligence (artificial intelligence, AI) technology-based radio resource allocation

When an AI technology is used to solve the foregoing radio resource allocation problem, to reduce complexity and reduce online decision-making time of a neural network, a deep learning method may be used to solve the problem. It may be understood that, it can be learned from the universal approximation theorem (universal approximation theorem) that, given enough hidden layers, a deep neural network (deep neural network, DNN) may fit any function with any precision. Therefore, the network device may fit a function relationship between the optimal resource allocation strategy and the environment status by using a strategy neural network $\overline{P}(h; W, b)$. $W = \{W^l\}_{l=1}^{L+1}$ and $b = \{b^l\}_{l=1}^{L+1}$ are respectively a weight parameter and an offset parameter of the strategy neural network. $W^l$ represents a connection weight of an $(l-1)^{th}$ layer and an $l^{th}$ layer, $b^l$ represents an offset of the $l^{th}$ layer, and $h$ represents an environment status. A $0^{th}$ layer is an input layer, and the $(l+1)^{th}$ layer is an output layer. The network device may train the weight parameter and the offset parameter of the strategy neural network by using a learning method such as supervised learning or unsupervised learning.

In a wireless communication system, a mobile terminal accesses or leaves a network from time to time. As a result, when the network device performs resource allocation, a considered quantity of terminals is changing. Further, when the network device uses an AI model to solve a radio resource allocation problem, an amount of input data of the AI model continuously changes.

Currently, for the dimension-changing radio resource allocation problem, a plurality of AI models applicable to different dimensions may be pre-trained. During specifically dealing with resource allocation, based on a quantity of terminals during actual calculation, an AI model of a proper dimension is selected for solving. Alternatively, each time a quantity of terminals changes, an AI model suitable for the quantity of terminals is retrained, and the radio resource allocation problem is solved by using the real-time trained AI model. However, both pre-training a plurality of AI models and retraining an AI model on demand each time cause high overheads. For example, when a plurality of AI models are pre-trained, many storage resources are needed to store the AI models, causing high storage overheads. For another example, each time a new AI model is trained on demand, high latency overheads and computing overheads are caused.

In addition, the foregoing radio resource allocation problem has the permutation equivalence characteristic. An element in the permutation environment status $h \triangleq [h_1, ..., h_k]$, and an element in the strategy $P \triangleq [p_1, ..., p_k]$ obtained by solving Formula (5) also undergo a same permutation.

FIG. 6 is a structure of a DNN having a permutation equivalence characteristic. As shown in FIG. 6, when the DNN is used to implement the function $f$, a $k^{th}$ vector $h_k^l$ of an $l^{th}$ hidden layer may be obtained based on an activation function. In other words, an $l^{th}$ layer of the DNN is forward deduced as:

$$h_k^l = \sigma(U^l h_k^{l-1} + \frac{V^l}{k}(\sum_{j \neq k} h_j^{l-1}) + c^l) \quad (6)$$

$h_k^l$ is the $k^{th}$ vector of the $l^{th}$ hidden layer, $U^l$ and $V^l$ are weight parameter submatrixes of the $l^{th}$ hidden layer, $c^l$ is an offset subvector of the $l^{th}$ hidden layer, and $\sigma(\cdot)$ represents the activation function. For example, $\sigma(\cdot)$ may be a softmax function. $k$ is greater than or equal to 1 and less than or equal to K. K is a quantity of terminals and is a positive integer.

A weight parameter matrix $W^l$ and an offset vector $b^l$ of the $l^{th}$ hidden layer of the DNN may be obtained according to Formula (6) and have the following structures:

$$W^l = \begin{bmatrix} U^l & \frac{V^l}{k} & \cdots & \frac{V^l}{k} \\ \frac{V^l}{k} & U^l & \cdots & \frac{V^l}{k} \\ \cdots & \cdots & \cdots & \cdots \\ \frac{V^l}{k} & \frac{V^l}{k} & \cdots & U^l \end{bmatrix} \quad (7)$$

$$b^l = \begin{bmatrix} c^l \\ c^l \\ \cdots \\ c^l \end{bmatrix} \quad (8)$$

It can be learned that the weight parameter matrix $W^l$ includes two submatrixes $U^l$ and $V^l$ according to a specific rule. To be specific, a diagonal of $W$ is $U^l$, a non-diagonal is $\frac{V^l}{k}$ and the offset vector $b^l$ includes $K$ offset subvectors $c^l$. Therefore, when the quantity K of terminals in the foregoing radio resource allocation problem changes, the submatrixes $U^l$ and $V^l$, and a quantity of vectors $c^l$ may be adjusted to form a new-dimension neural network suitable for the quantity of terminals, and the radio resource allocation strategy is dealt with by using the new-dimension neural network, without retraining the neural network.

However, the radio resource allocation problem does not have the foregoing dimensional generalization characteristic. Therefore, for the submatrixes $U^l$ and $V^l$, and $c^l$ obtained through training under a specific value of $K$, when a quantity of terminals is not equal to K, an optimal output $y_k$ cannot be obtained, that is, an optimal resource allocation strategy cannot be obtained. Accuracy of an obtained resource allocation strategy is low, and a large loss is caused to the system.

Similarly, when another to-be-solved problem in the wireless communication system does not have a dimensional generalization characteristic, and a quantity of devices changes, if the to-be-solved problem is still solved based on a trained neural network, accuracy of a solution to the to-be-solved problem is also reduced.

An embodiment of this application provides a data processing method 100. In the data processing method 100, a first apparatus obtains K-dimensional data. The first apparatus inputs the K-dimensional data into a first machine learning model, to obtain a solution to a to-be-solved problem. The first machine learning model includes a first processing module and a second processing module. The second processing module is determined based on a constraint condition of the to-be-solved problem. The second processing module is configured to perform dimensional generalization on the K-dimensional data. The first processing module is obtained through training based on m-dimensional data. A value of m is irrelevant to a value of K. When the first apparatus solves the to-be-solved problem, the second processing module that performs the dimensional generalization on the K-dimensional data is used, so that a dimensional generalization capability of the K-dimensional data can be enhanced. In addition, the first processing module obtained through pre-training based on the m-dimensional data is used, and the first processing module does not need to be retrained due to a dimension change of input data, so that accuracy of the solution to the to-be-solved problem can be ensured with low system overheads.

An embodiment of this application further provides a data processing method 200 by using an example: a to-be-solved problem is about power at which one network device sends a communication signal to K terminals when a total bandwidth at which the network device communicates with the K terminals is minimized, and a constraint condition of the to-be-solved problem includes that total power at which communication signals are sent falls within a first range. In the data processing method 200, a first apparatus obtains K-dimensional data, and inputs the K-dimensional data into a first processing module, to obtain K first intermediate solutions; and then inputs the K first intermediate solutions into a second processing module, to obtain a solution to the to-be-solved problem. The K-dimensional data is channel gains between the network device and the K terminals. In this embodiment of this application, a power allocation problem when the network device sends the communication signal to the K terminals does not have a dimensional generalization characteristic, and the first apparatus cannot generalize the first processing module to process the K-dimensional data. Therefore, the first intermediate solutions output by the first processing module are processed by the normalized exponential function activation layer, so that the first apparatus implements dimensional generalization on the K-dimensional data. In this way, when the total bandwidth at which the network device communicates with the K terminals is minimized, the solved power at which the network device sends the communication signal to the K terminals is more accurate.

An embodiment of this application further provides a data processing method 300 by using an example: a to-be-solved problem is about a bandwidth and power at which one network device communicates with K terminals when a total bandwidth at which the network device communicates with the K terminals is minimized, and a constraint condition of the to-be-solved problem includes that quality of service of communication between the network device and each of the K terminals falls within a second range. In the data processing method 300, a first apparatus obtains K-dimensional data; the first apparatus inputs the K-dimensional data into a first processing module, to obtain K first intermediate solutions; the first apparatus inputs the K first intermediate solutions into an activation layer, to obtain K second intermediate solutions; and the first apparatus inputs the K second intermediate solutions into a scaling factor layer, to obtain a solution to the to-be-solved problem. The K-dimensional data is channel gains between the network device and the K terminals. In this embodiment of this application, a bandwidth allocation problem when the network device communicates with the K terminals also does not have a dimensional generalization characteristic, and the first apparatus cannot generalize the first processing module to process K-dimensional data. Therefore, the first intermediate solutions output by the first processing module are processed by the activation layer and the scaling factor layer, so that the first apparatus implements dimensional generalization on the K-dimensional data. In this way, accuracy of a solution to the bandwidth allocation problem can be improved, that is, accuracy of the bandwidth at which the network device communicates with the K terminals is improved.

III. Data processing method

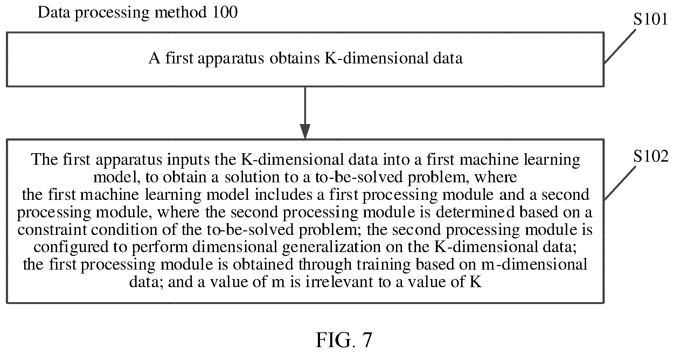

An embodiment of this application provides a data processing method 100. FIG. 7 is a schematic flowchart of the data processing method 100. The data processing method 100 is described from a perspective of a first apparatus. The data processing method 100 includes but is not limited to the following steps.

S101. A first apparatus obtains K-dimensional data.

K is a positive integer. The K-dimensional data is for solving a to-be-solved problem. The to-be-solved problem may be a problem in a wireless communication system. For example, the to-be-solved problem is how to allocate resources to K terminals, or perform channel prediction on K channels. Therefore, the K-dimensional data is determined based on the to-be-solved problem. In other words, the K-dimensional data varies with the to-be-solved problem.

The first apparatus may obtain the K-dimensional data through channel estimation, or may obtain the K-dimensional data in another manner, for example, receiving the K-dimensional data from another device. An implementation in which the first apparatus obtains the K-dimensional data is not limited in this embodiment of this application.

S 102. The first apparatus inputs the K-dimensional data into a first machine learning model, to obtain a solution to the to-be-solved problem, where the first machine learning model includes a first processing module and a second processing module, where the second processing module is determined based on a constraint condition of the to-be-solved problem; the second processing module is configured to perform dimensional generalization on the K-dimensional data; the first processing module is obtained through training based on m-dimensional data; and a value of m is irrelevant to a value of K.

m is a positive integer. The value of m is irrelevant to the value of K, indicating that the first processing module obtained through pre-training is irrelevant to K. A $k$th output of the first processing module is related to a $k$th input, and is irrelevant to a quantity K of inputs. In other words, the first processing module may have a permutation equivalence characteristic.

The second processing module is determined based on the constraint condition of the to-be-solved problem. Therefore, when the to-be-solved problem is different, the second processing module is different, or when constraint conditions of a same to-be-solved problem are different, the second processing module is also different.

In addition, the second processing module is configured to perform the dimensional generalization on the K-dimensional data, to improve a dimensional generalization capability of the K-dimensional data, so that accuracy of the solution to the to-be-solved problem can be improved.

In an optional implementation, the to-be-solved problem does not have a dimensional generalization characteristic. When the to-be-solved problem does not have a dimensional generalization characteristic, the first processing module obtained through training based on the m-dimensional data cannot be generalized to process the K-dimensional data. If the to-be-solved problem is solved based on the first processing module, accuracy of an obtained solution to the to-be-solved problem is low. Therefore, the first apparatus solves the to-be-solved problem based on the first processing module obtained through training based on the m-dimensional data and the second processing module that performs dimensional generalization on the K-dimensional data, so that the dimensional generalization capability of the K-dimensional data can be improved, to obtain an accurate solution.

In an optional implementation, the first processing module is a permutation equivalence neural network or a graph neural network having a permutation equivalence characteristic. Optionally, the first processing module may alternatively be another neural network having a permutation equivalence characteristic. In this implementation, the first processing module may be used when the first apparatus solves a to-be-solved problem having a permutation equivalence characteristic.

In an optional implementation, before inputting the K-dimensional data into the first machine learning model, to obtain the solution to the to-be-solved problem, the first apparatus may determine, based on a relationship between the to-be-solved problem and K, whether the to-be-solved problem has a dimensional generalization characteristic. When determining that the to-be-solved problem does not have a dimensional generalization characteristic, the first apparatus inputs the K-dimensional data into the first machine learning model, to obtain the solution to the to-be-solved problem. When determining that the to-be-solved problem has a dimensional generalization characteristic, the first apparatus inputs the K-dimensional data into a second machine learning model, to obtain the solution to the to-be-solved problem. The second machine learning model includes a first processing module.

In other words, when the to-be-solved problem has a dimensional generalization characteristic, the first processing module obtained through training based on the m-dimensional data is generalized to the K-dimensional data. Therefore, when the first apparatus solves the to-be-solved problem, the second processing module does not need to perform the dimensional generalization on the K-dimensional data, and the to-be-solved problem may be directly solved by using the first processing module, to obtain an accurate value.

The following describes a dimensional generalization condition for determining whether the to-be-solved problem has a dimensional generalization characteristic.

In this embodiment of this application, the to-be-solved problem has a permutation equivalence characteristic. Therefore, for a PE strategy $y = F(X)$, the PE strategy satisfies $\Pi y = F(\Pi X)$ for any permutation matrix $\Pi$.

$$X \triangleq [x_1, ..., x_k]$$ and $$y \triangleq [y_1, ..., y_k]$$. According to the Kolmogorov-Arnold representation theorem, it may be obtained that a $k$th output of the strategy may be represented as $$y_k = f_k(X) \triangleq \tilde{f}(x_k, \sum_{j \neq k} \phi(x_j))$$, , and $\forall_k. \phi(\cdot)$

represents a function. $[x_j]_{j \neq k}$ represents that a vector of $x_k$ is removed from $x$ , the vector is arranged in descending (or ascending) order, and an arranged vector is recorded as $[x_j^d]_{j \neq k}$. Because a sum result of $\Sigma_{j \neq k} \phi(x_j)$ is not affected by an order of vectors, $$\sum_{j \neq k} \phi(x_j) = \sum_{j \neq k} \phi(x_j^d)$$. When $K \to \infty$ and $x_j$ is independent and identically distributed, it may be obtained that a variance of $x_j^d$ is close to 0, and a mean value depends on K. Therefore, when $K \to \infty$, $$\sum_{j \neq k} \phi(x_j^d)$$ is

approximated to a function related to K, for example, $$\sum_{j \neq k} \phi(x_j^d) \to \bar{f}(K)$$. . Therefore, $y_k$ may be represented as:

$$y_k = \tilde{f}(x_k, \sum_{j \neq k} \phi(x_j^d)) \to \tilde{f}(x_k, \bar{f}(K)) \triangleq f(x_k, K) \quad (9)$$

It can be learned that when K is greater than a preset value, $y_k$ is approximated to a function about $x_k$ and K. In

other words, the PE strategy $y = F(X)$ is decomposable in a high dimension. The preset value is predefined. For example, the preset value is 100 or 200.

Therefore, a determining condition of the dimensional generalization characteristic of the to-be-solved problem may be represented as:

When $K, K' \to \infty$, if the PE strategy $y = F(X)$ satisfies $y_k = f(x_k, K) = f(x_k, K')$ for any $K \neq K'$, a neural network trained in a dimension K may be generalized to a dimension, and a to-be-solved problem of the PE strategy has a dimensional generalization characteristic. When $K, K' \to \infty$, if the PE strategy $y = F(X)$ does not satisfy $y_k = f(x_k, K) = f(x_k, K')$ for any $K \neq K'$, a to-be-solved problem of the PE strategy does not have a dimensional generalization characteristic.

It can be learned that when a function representing the to-be-solved problem is irrelevant to a quantity K of variables, the to-be-solved problem has a dimensional generalization characteristic; or when a function representing the to-be-solved problem is related to a quantity K of variables, the to-be-solved problem does not have a dimensional generalization characteristic. In other words, as the quantity K of variables changes, when the function representing the to-be-solved problem does not change, the to-be-solved problem has a dimensional generalization characteristic; or as the quantity K of variables changes, when the function representing the to-be-solved problem changes, the to-be-solved problem does not have a dimensional generalization characteristic.

In an optional implementation, when the first apparatus determines that the to-be-solved problem does not have a dimensional generalization characteristic, inputting the K-dimensional data into the first machine learning model, to obtain the solution to the to-be-solved problem includes: inputting the K-dimensional data into the first processing module, to obtain first intermediate solutions; and inputting the K first intermediate solutions into the second processing module, to obtain the solution to the to-be-solved problem.

It can be learned that, when the first apparatus solves the to-be-solved problem, the K-dimensional data is input into the pre-trained first processing module to obtain the K first intermediate solutions; and then the second processing module that performs dimensional generalization performs dimensional generalization on the K first intermediate solutions, to implement dimensional generalization on the K-dimensional data, so that the solution to the to-be-solved problem can be more accurate.

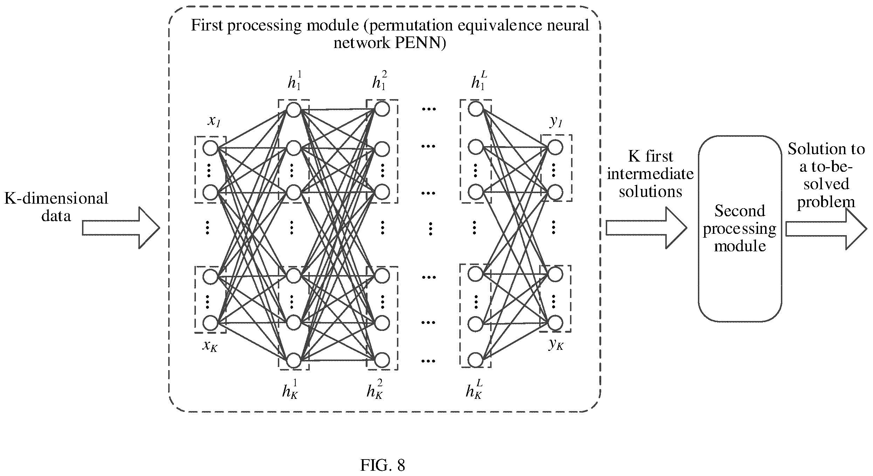

For example, when the first processing module is a PENN, a structure of the first machine learning model may be shown in FIG. 8. The PENN is obtained through training based on the m-dimensional data. The second processing module is configured to perform dimensional generalization on the K-dimensional data. The first apparatus inputs the K-dimensional data into the PENN, and then inputs an output (the K first intermediate solutions) of the PENN into the second processing module. The second processing module outputs the solution to the to-be-solved problem. The second processing module performs the dimensional generalization on the K first intermediate solutions, to improve a dimensional generalization capability of the K-dimensional data, so that accuracy of the solution to the to-be-solved problem can be improved.

It can be learned that, in this embodiment of this application, when solving the to-be-solved problem, the first apparatus not only uses the first processing module obtained through pre-training, but also uses the second processing module that performs the dimensional generalization on the K-dimensional data, to enhance the dimensional generalization capability of the K-dimensional data, so that the accuracy of the solution to the to-be-solved problem is improved.

In addition, according to the method, the first machine learning model obtained by the first apparatus through low-dimension training may be directly used in a communication problem in a high dimension, and the learning model does not need to be retrained, to reduce overheads.

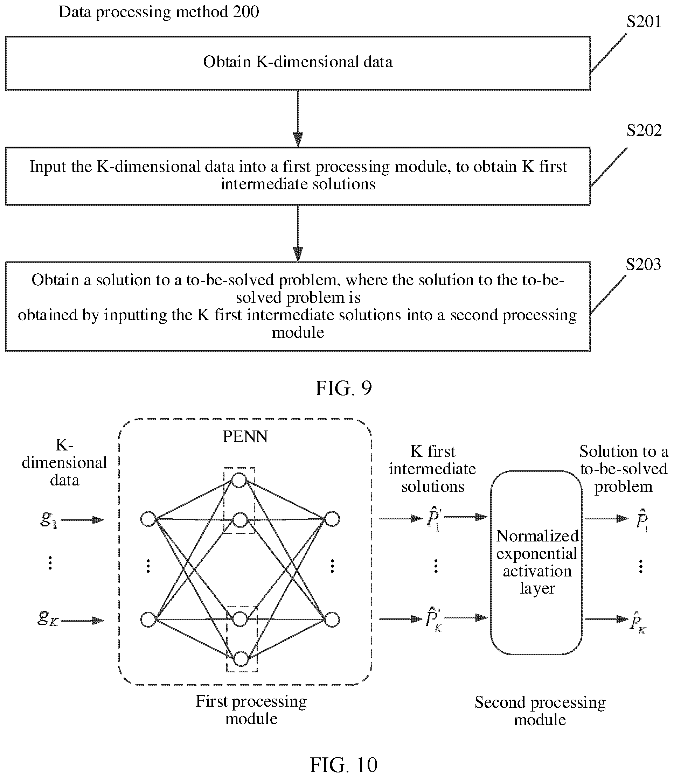

An embodiment of this application further provides a data processing method 200 by using an example: a to-be-solved problem is about power at which one network device sends a communication signal to K terminals when a total bandwidth at which the network device communicates with the K terminals is minimized, and a constraint condition of the to-be-solved problem includes that total power at which the network device sends communication signals to the K terminals falls within a first range. FIG. 9 is a schematic flowchart of the data processing method 200. The data processing method 200 may be applied to a first apparatus. The data processing method 200 includes but is not limited to the following steps.

S201. Obtain K-dimensional data.

In this embodiment of this application, the to-be-solved problem is about power at which one network device sends a communication signal to K terminals when a total bandwidth at which the network device communicates with the K terminals is minimized. The constraint condition of the to-be-solved problem includes that total power at which the network device sends communication signals to the K terminals falls within a first range. The constraint condition further includes that the K terminals are served by a same single-antenna network device, the network device communicates with the K terminals at a same bandwidth, and quality of service of each of the K terminals falls within a second range. K is a positive integer.

It can be learned that, the to-be-solved problem is a problem about allocation of power at which the network device sends the communication signal to the K terminals when the single-antenna network device serves the K terminals, the network device communicates with all the terminals at the same bandwidth, the total power at which the network device sends the communication signal to the K terminals is limited, and quality of service of each terminal is limited, to minimize the total bandwidth at which the network device communicates with the K terminals. In other words, the to-be-solved problem is, under a specific constraint, a problem about allocation of power at which one network device sends a communication signal to K terminals when the network device performs downlink communication with the K terminals.

In this embodiment of this application, the K-dimensional data is channel gains between the network device and the K terminals. The first apparatus may be a network device, or the first apparatus is a device other than the network device. When the first apparatus is a network device, the terminal device performs channel estimation to obtain the K-dimensional data, and then the terminal device sends the K-dimensional data to the network device, so that the first apparatus obtains the K-dimensional data from the terminal device. Optionally, when the first apparatus is a terminal device, the first apparatus performs channel estimation to obtain the K-dimensional data. Optionally, when the first apparatus is a device other than the terminal device and the network device, the first apparatus also obtains the K-dimensional data from the terminal device, and the K-dimensional data is obtained by the terminal device through channel estimation.

S202. Input the K-dimensional data into a first processing module, to obtain K first intermediate solutions.

In a possible implementation, a model of the to-be-solved problem may be represented as:

$$\min_{P_k, B} KB$$

$$s_k \triangleq B \log(1 + \frac{P_k g_k}{N_0 B}) \geq s_0$$

$$\sum_{k=1}^{K} P_k \leq P_{\max} \quad (10)$$

$$P_k \geq 0, B \geq 0$$

$B$ is the bandwidth at which the network device communicates with each terminal, $P_k$ is transmit power at which the network device sends data to a $k^{th}$ terminal, $\mathbf{g} = [g_1, g_2, ..., g_K]$ is the channel gains between the network device and the K terminals, that is, the K-dimensional data, $N_0$ is noise power, $s_k$ is a receive throughput of the $k^{th}$ terminal, $s_0$ is a minimum throughput requirement of the terminal, and $P_{\max}$ is a maximum value of total transmit power of the network device. $N_0$ is obtained by the $k^{th}$ terminal device through noise estimation, and then fed back by the $k^{th}$ terminal device to the first apparatus. $s_0$ is determined based on a communication requirement of the $k^{th}$ terminal device. $P_{\max}$ is specified by a communication system, for example, specified by the network device.

Therefore, that the total power of the K terminals falls within the first range means that the total power of the K terminals is less than or equal to $P_{\max}$; and that the quality of service of each terminal in the K terminals falls within the second range means that a receive throughput of each terminal is greater than or equal to $s_0$.

In an optional implementation, before solving the power allocation problem, the first apparatus determines whether the power allocation problem has a dimensional generalization characteristic. In Formula (10), $s_k$ is a joint convex function of $P_k$ and $B$. Therefore, the power allocation problem is a convex problem. The first apparatus obtains a global optimal solution to the power allocation problem according to the Karush-Kuhn-Tucker (Karush-Kuhn-Tucker, KKT) condition as follows:

$$P_k^* = \frac{P_{\max}}{g_k \sum_{j=1}^{K} \frac{1}{g_j}} \quad (11)$$

When K is large enough, the optimal solution to the power allocation problem may be approximated to:

$$P_k^* \approx \frac{1}{K} \frac{P_{\max}}{g_k IE(\frac{1}{g_k})} \quad (12)$$

$IE(\cdot)$ is expectation calculation. It can be learned from Formula (12) that optimal power allocation is related to a quantity K of terminals. Therefore, the power allocation problem in Formula (12) does not satisfy a dimensional generalization condition. In this case, a first machine learning model includes the first processing module and a second processing module, the first processing module is obtained through training based on m-dimensional data, and a value of m is irrelevant to a value of K. The second processing module is configured to perform dimensional generalization on the K-dimensional data. Therefore, when the first apparatus solves the foregoing power allocation problem, the second processing module may be used to perform the dimensional generalization on the K-dimensional data, to obtain an accurate solution.

A possible variation of Formula (12) is:

$$\boldsymbol{P}^* = [\frac{P_{\max}}{g_1 \sum_{j=1}^{K} \frac{1}{g_j}}, ..., \frac{P_{\max}}{g_K \sum_{j=1}^{K} \frac{1}{g_j}}] = [\frac{P_{\max} e^{\ln \frac{1}{g_1}}}{\sum_{j=1}^{K} e^{\ln \frac{1}{g_j}}}, ..., \frac{P_{\max} e^{\ln \frac{1}{g_K}}}{\sum_{j=1}^{K} e^{\ln \frac{1}{g_j}}}] = \boldsymbol{\sigma}_s(f_e(g_1), ..., f_e(g_K)) \quad (13)$$

$\sigma_s$ is a normalized exponential function, for example, a softmax function. $f_e(g_k) = \ln \frac{1}{g_k}$. Therefore, as shown in FIG. 10, the first processing module in the first machine learning model may be a PENN or a GNN. In other words, $\hat{P}'_k = f_e(g_k)$ is trained by using the PENN or the GNN. The second processing module in the first machine learning model may be a normalized exponential activation layer, the normalized exponential activation layer may include a softmax function, and the softmax function is for performing the dimensional generalization on the K-dimensional data.

In this embodiment of this application, the PENN, the GNN, and the normalized exponential function may be trained in the foregoing gradient backpropagation manner. A training process is not described in detail again.

For example, as shown in FIG. 10, when the first processing module is a PENN, inputting the K-dimensional data into the first processing module, to obtain the K first intermediate solutions means to input $[g_1, g_2, ..., g_K]$ into the PENN to obtain the K first intermediate solutions output by the PENN, that is, $[\hat{P}'_1, \hat{P}'_2, ..., \hat{P}'_K]$. The PENN is obtained by the first apparatus through training based on scale channel gains between the network device and m terminals, a value of m is irrelevant to the value of K, and the scale channel gain may be a small-scale channel gain, or may be a large-scale channel gain.

In this embodiment of this application, the small-scale channel gain indicates an impact of channel fading on signal transmission when a receiving end is close to a transmitting end, for example, an impact of multipath fading and Doppler fading of the channel on signal transmission. The large-scale channel gain indicates an impact of a path loss on signal transmission when the receiving end is far from the transmitting end.

The power allocation problem in this embodiment of this application does not have a dimensional generalization characteristic. Therefore, the PENN obtained through training based on the m-dimensional data cannot be generalized to process the K-dimensional data. Therefore, the K first intermediate solutions obtained by inputting the K-dimensional data into the PENN have low accuracy, and the K first intermediate solutions cannot be directly used as a power allocation strategy for sending the communication signal by the network device to the K terminals.

S203. Obtain a solution to the to-be-solved problem, where the solution to the to-be-solved problem is obtained by inputting the K first intermediate solutions into the second processing module.

In a possible implementation, the second processing module includes the normalized exponential activation layer. As shown in FIG. 10, obtaining the solution to the to-be-solved problem means to input $[\hat{P}'_1, \hat{P}'_2, ..., \hat{P}'_K]$ into the normalized exponential activation layer, that is, $[\hat{P}'_1, \hat{P}'_2, ..., \hat{P}'_K]$ is used as an input of the softmax function, to obtain output $[\hat{P}_1, \hat{P}_2, ..., \hat{P}_K]$. $\hat{P}_1, \hat{P}_2, ... \hat{P}_K$ is the solution to the to-be-solved problem, that is, the power allocation strategy for sending the communication signal by the network device to the K terminals.

The normalized exponential activation layer may perform dimensional generalization on the K-dimensional data. Therefore, $[\hat{P}'_1, \hat{P}'_2, ..., \hat{P}'_K]$ output by the PENN is input to the normalized exponential activation layer, and an output result of the PENN may be generalized to a dimension K, so that a dimensional generalization capability of the K-dimensional data can be improved, and an output of the normalized exponential activation layer is used as the solution to the power allocation problem, to improve accuracy of the solution.

In this embodiment of this application, when the first apparatus is the network device, after obtaining the solution to the to-be-solved problem, the first apparatus sends the communication signal to the K terminals based on the solution (that is, the power at which the communication signal is sent to the K terminals). Optionally, when the first apparatus is the terminal device, or is a device other than the network device and the terminal device, after obtaining the solution to the to-be-solved problem, the first apparatus sends the solution to the to-be-solved problem to the network device, so that the network device sends the communication signal to the K terminals based on the solution (that is, the power at which the communication signal is sent to the K terminals).

It can be learned that, in this embodiment of this application, the to-be-solved problem is about power at which one network device sends a communication signal to K terminals when a total bandwidth at which the network device communicates with the K terminals is minimized, and the constraint condition of the to-be-solved problem includes that the total power at which the network device sends the communication signal to the K terminals falls within the first range, the K-dimensional data is input into the first processing module obtained through pre-training, and then the first intermediate solutions output by the first processing module are input into the second processing module including the normalized exponential layer, to obtain the solution to the to-be-solved problem. The power allocation problem does not have a dimensional generalization characteristic, and the first processing module cannot be generalized to process the K-dimensional data. Therefore, the first intermediate solutions output by the first processing module are then processed by the normalized exponential activation layer, to implement dimensional generalization on the K-dimensional data, so that the solved power is more accurate when the total bandwidth is minimized.

It can be learned that, in the foregoing data processing method 200, an example in which the network device performs downlink transmission with the K single-antenna terminal devices is used, to solve allocation of the power at which the network device sends the communication signal to the K terminals. During solving a problem about allocation of power at which K terminals send communication signals to one network device when uplink transmission is performed between the network device and the K terminals, that is, a to-be-solved problem is about power at which K terminals send communication signals to one network device when a total bandwidth at which the network device communicates with the K terminals is minimized, when a constraint condition of the to-be-solved problem includes that total power at which the K terminals send the communication signals to the network device falls within a third range, an implementation is similar to that of the foregoing data processing method 200 and details are not described herein again.

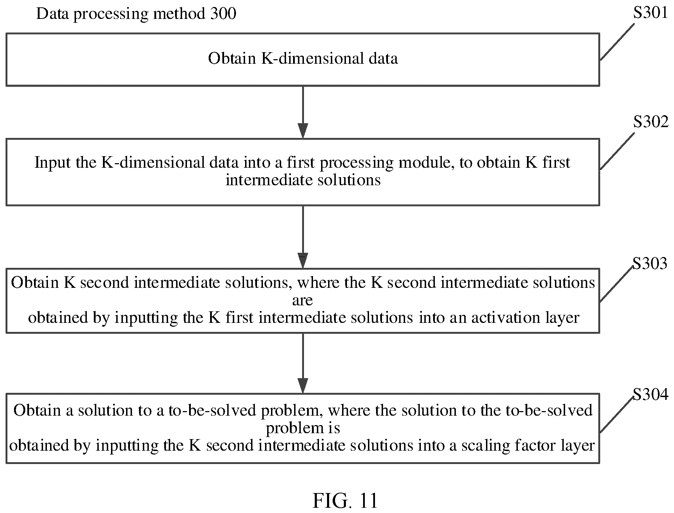

An embodiment of this application further provides a data processing method 300 by using an example: a to-be-solved problem is about a bandwidth and power at which one network device sends a communication signal to K terminals when a total bandwidth at which the network device communicates with the K terminals is minimized, and a constraint condition includes that quality of service of communication between the network device and each of the K terminals falls within a second range. FIG. 11 is a schematic flowchart of the data processing method 300. The data processing method 300 may be applied to a first apparatus. The data processing method 300 includes but is not limited to the following steps.

S301. Obtain K-dimensional data.

In this embodiment of this application, the to-be-solved problem is about power and a bandwidth at which one network device sends a communication signal to K terminals when a total bandwidth at which the network device communicates with the K terminals is minimized. The constraint condition of the to-be-solved problem includes that quality of service of communication between the network device and each of the K terminals falls within a second range. The constraint condition further includes that the K terminals are served by a same network device equipped with N antennas, the K terminals communicate with the network device at different bandwidths, and total power at which the network device sends the communication signals to the K terminals falls within a first range.

It can be learned that, the to-be-solved problem is a problem about allocation of a bandwidth and a problem about allocation of power at which the network device sends the communication signal to the K terminals when the multi-antenna network device serves the K terminals, all terminals may use different bandwidths, the total power at which the network device sends the communication signal to the K terminals is limited, and the quality of service of each terminal is limited, to minimize the total bandwidth at which the network device sends the communication signal to the K terminals. In other words, the to-be-solved problem is a bandwidth allocation problem and a power allocation problem when one network device performs downlink communication with K terminals under a specific constraint condition.

In this embodiment of this application, the K-dimensional data is channel gains between the network device and the K terminals. The first apparatus may be a network device, or the first apparatus is a device other than the network device. When the first apparatus is a network device, the terminal performs channel estimation to obtain the K-dimensional data, and then the terminal sends the K-dimensional data to the network device, so that the first apparatus obtains the K-dimensional data from the terminal. Optionally, when the first apparatus is a terminal, the first apparatus performs channel estimation to obtain the K-dimensional data. Optionally, when the first apparatus is a device other than the terminal and the network device, the first apparatus also obtains the K-dimensional data from the terminal, and the K-dimensional data is obtained by the terminal through channel estimation.

S302. Input the K-dimensional data into a first processing module, to obtain K first intermediate solutions.

In this embodiment of this application, a model of the to-be-solved problem may be represented as:

$$\min_{P_k, B_k} \sum_{k=1}^{K} B_k$$

$$C_k^E \geq s^E$$

$$\sum_{k=1}^{K} P_k \leq P_{\max} \qquad (14)$$

$$P_k \geq 0, B_k \geq 0$$

$B_k$ is a bandwidth used by a $k$ th terminal, $P_k$ is transmit power at which the network device sends data to the $k$ th terminal, $C_k^E = -\dfrac{1}{\theta} \ln IE(e^{-\theta s_k})$, $C_k^E$ is an effective throughput of the $k$ th terminal, and $\theta$ is a quality of service (quality of service, QoS) index. $S^E$ is a target throughput, and is determined based on a service requirement of the terminal device. $P_{\max}$ is a maximum value of total transmit power of the network device, and is specified by a system. $S_k$ is a reachable throughput of the $k$ th terminal, is determined based on a requirement of the $k$ th terminal, and may be approximated as $s_k \approx \dfrac{\tau B_k}{\mu \ln 2} [\ln(1 + \dfrac{\alpha_k P_k g_k}{N_0 B_k}) - \dfrac{Q_G^{-1}(\varepsilon_k^C)}{\sqrt{\tau B_k}}]$. $\tau$ is transmission time, $\mu$ is a data packet size, $\alpha = [\alpha_1, \alpha_2, ..., \alpha_K]$ is large-scale gains between the network device and the K terminals, $g = [g_1, g_2, ..., g_K]$ is small-scale channel gains between the network device and the K terminals, $N_0$ is noise power, $\varepsilon_k^C$ is a decoding error probability of the $k^{th}$ terminal, and $Q_G^{-1}(\cdot)$ is an inverse function of a Gaussian function Q. $\varepsilon_k^C$ is determined based on a channel condition between the network device and the $k$ th terminal, the channel condition is a large-scale channel gain between the network device and the $k$ th terminal, and the large-scale channel gain represents channel fading.

The network device determines, based on a KKT condition, that an optimal solution to the problem meets the following condition:

$$\sum_{k=1}^{K} P_k^* = P_{\max}$$

$$C_k^E = -\frac{1}{\theta} \ln IE_{g_k} \left\{ e^{-\theta s_k(g_k, \alpha_k, P_k^*, B_k^*)} \right\} = S^E \qquad (15)$$

In an optional implementation, before solving the power allocation problem and the bandwidth allocation in Formula (14), the network device determines whether the to-be-solved problem has a dimensional generalization characteristic. It can be learned from Formula (15) that, because an upper limit of total power $P_{\max}$ of the K terminals is fixed, an optimal power allocation strategy $P_k^*$ decreases with an increase of K. In addition, because power $P_k$ of each terminal decreases with an increase of K, to meet a throughput requirement of the terminal, a required bandwidth needs to be increased. Therefore, an optimal bandwidth allocation strategy $B_k^*$ increases with an increase of K. In conclusion, neither the power allocation strategy $P_k^*$ nor the bandwidth allocation strategy $B_k^*$ in this embodiment of this application meets a dimensional generalization characteristic.

Therefore, a first machine learning model including the first processing module and a second processing module may be used for solving the power allocation problem and the bandwidth allocation problem. The first processing module is obtained through training based on m-dimensional data. The second processing module is determined based on the constraint condition of the to-be-solved problem, and the second processing module is configured to perform dimensional generalization on the K-dimensional data. Therefore, the first machine learning model is used to solve the power allocation and the bandwidth allocation for the K terminals, so that an accurate solution can be obtained.

A constraint condition for solving the power allocation strategy in this embodiment of this application is the same as the constraint condition in the data processing method 300. Therefore, the first machine learning model in the data processing method 300 may be used to solve the allocation of the power at which the network device sends the communication signal to the K terminals, so that an accurate allocation result can be obtained. Therefore, the data processing method provided in this embodiment of this application is applicable to solve the allocation of the bandwidth at which the network device sends the communication signal to the K terminals.

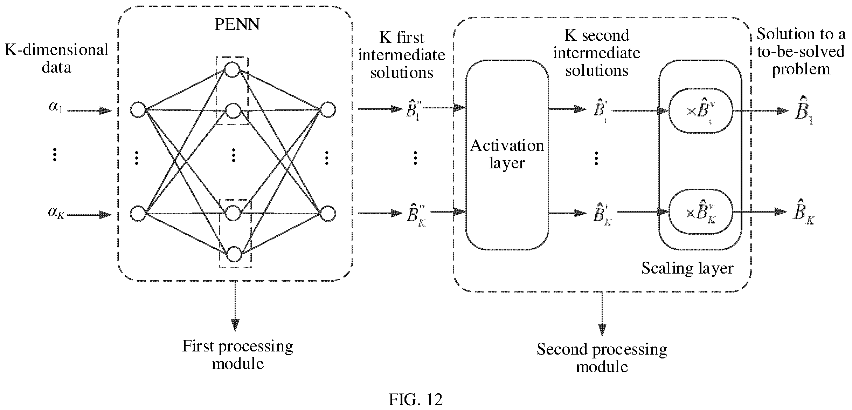

In an optional implementation, when the bandwidth at which the network device sends the communication signal to the K single-antenna terminals is solved, based on the constraint condition that quality of service of communication between the network device and each of the K terminals falls within the second range, it is determined that a first machine learning model includes a first processing module and a second processing module shown in FIG. 12. The first processing module includes a PENN, a GNN, or another neural network having a permutation equivalence characteristic.

As shown in FIG. 12, obtaining the K first intermediate solutions means to input the K-dimensional data into the first processing module, that is, inputting $[\alpha_1, \alpha_2, ..., \alpha_K]$ into the PENN to obtain the K first intermediate solutions. The K first intermediate solutions are $[\hat{B}_1^{'}, \hat{B}_2^{''}, ..., \hat{B}_K^{''}]$ .

S303. Obtain K second intermediate solutions, where the K second intermediate solutions are obtained by inputting the K first intermediate solutions into an activation layer.

The second processing module includes the activation layer and a scaling factor layer. The activation layer may be a softplus function, the softplus function may be represented as $\zeta(x) = \log(1+e^x)$, and $x$ is the first intermediate solution output by the first processing module.

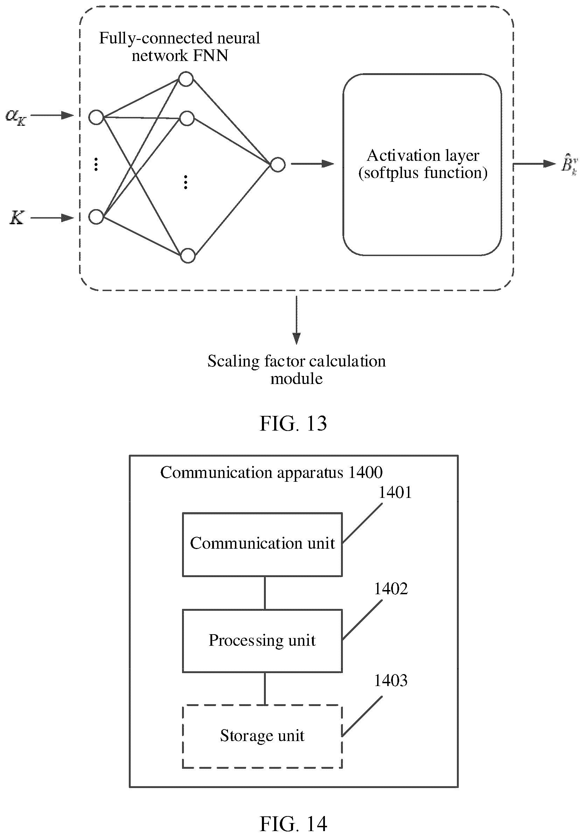

A $k^{th}$ scaling factor in the scaling factor layer is obtained by inputting a $k^{th}$-dimensional piece of data and K into a scaling factor calculation module. $k$ is a positive integer less than or equal to K. A scaling factor calculation module may be shown in FIG. 13. The scaling factor calculation module includes a fully-connected neural network (fully-connected neural network, FNN) and an activation layer, and the activation layer may also be a softplus function. The network device inputs a $k^{th}$ piece of data $\alpha_k$ and K, and then inputs an output result of the FNN into the softplus function, to obtain a $k^{th}$ scaling factor $\hat{B}_k^{v}$ . Therefore, the first apparatus may obtain K scaling factors based on the scaling factor calculation module, the K-dimensional data, and K. The K scaling factors are used by the scaling factor layer in the second processing module. The scaling factor layer is configured to scale the second intermediate solutions output by the activation layer.

As shown in FIG. 12, the activation layer includes the softplus function. Therefore, obtaining the K second intermediate solutions may mean inputting K $[\hat{B}_1^{'}, \hat{B}_2^{'}, ..., \hat{B}_K^{'}]$ into the softplus function to obtain the K second intermediate solutions as $[\hat{B}_1^{'}, \hat{B}_2^{'}, ..., \hat{B}_K^{'}]$ .

S304. Obtain a solution to the to-be-solved problem, where the solution to the to-be-solved problem is obtained by inputting the K second intermediate solutions into the scaling factor layer.

As shown in FIG. 12, allocation of a bandwidth, that is, $[\hat{B}_1, \hat{B}_2, ..., \hat{B}_K]$ , at which the network device sends the communication signal to the K terminals is obtained by inputting $[\hat{B}_1^{'}, \hat{B}_2^{'}, ..., \hat{B}_K^{'}]$ into the scaling factor layer, to obtain the solution to the to-be-solved problem.

In a possible implementation, the bandwidth allocation problem and the power allocation problem in Formula (14) in this embodiment of this application are equivalent to the following primal-dual optimization problem:

$$\max_{\lambda_k} \min_{P_k, B_k} L(\boldsymbol{\alpha}, P_k, B_k, \lambda_k) \triangleq \sum_{k=1}^{K} [B_k + \lambda_k (IE_{g_k} \{ e^{-\theta_k} \} - e^{-\theta S^g})]$$

$$\sum_{k=1}^{K} P_k \le P_{\max}$$

$$P_k \ge 0, B_k \ge 0, \lambda_k \ge 0$$

(16)

$L(\alpha, P_k, B, \lambda_k)$ represents a Lagrangian function, $\lambda_k$ is a Lagrangian multiplier, and $IE(\cdot)$ is expectation calculation.

The to-be-solved problem in Formula (14) may be solved by using three strategy neural networks and one FNN. The three strategy neural networks may be respectively represented as $\mathcal{P}_P(\alpha; \theta_P)$, $\mathcal{P}_B(\alpha; \theta_B)$, and $\mathcal{P}_\lambda(\alpha; \theta_\lambda)$. $\mathcal{P}_P(\alpha; \theta_P)$ is a neural network shown in FIG. 10, including a PENN and a normalized exponential activation layer using a softmax function as an activation function, and is for outputting a power allocation strategy. $\mathcal{P}_B(\alpha; \theta_B)$ is a neural network shown in FIG. 12, including a PENN, an activation layer using softplus as an activation function, and a scaling layer, and is for outputting a to-be-scaled bandwidth allocation strategy. $\mathcal{P}_\lambda(\alpha; \theta_\lambda)$ includes a PENN and an activation layer using softplus as an activation function, and is for outputting the Lagrangian multiplier. The FNN is $\mathfrak{B}^v(\alpha_k, K; \theta_v)$, and is for outputting a scaling factor of the to-be-scaled bandwidth allocation strategy. $\alpha_k$ is a large-scale channel gain between the network device and the $k^{th}$ terminal. $\theta_v$ is a to-be-trained parameter in the FNN.

It can be learned from Formula (15) that the conditions for solving the bandwidth allocation problem and the power allocation problem in Formula (14) are related to $P_k$ and $B_k$. In other words, $P_k$ and $B_k$ affect each other. It can be further learned from Formula (16) that, a loss function of the neural network for solving the bandwidth allocation problem and the power allocation problem is not only related to inputted $\alpha$, but also related to $P_k$, $B_k$, and $\lambda_k$. In other words, a relationship between $P_k$ and $B_k$ may be established via A, and therefore $\mathcal{P}_P(\alpha;\theta_P)$, $\mathcal{P}_B(\alpha;\theta_B)$, and $\mathcal{P}_\lambda(\alpha;\theta_\lambda)$, need to be jointly trained to obtain $\mathcal{P}_P(\alpha;\theta_P)$ for solving the power allocation problem and $\mathcal{P}_B(\alpha;\theta_B)$ for solving the bandwidth allocation problem. It can be learned that $P_\lambda(\alpha;\theta_\lambda)$ is for establishing a relationship between $\mathcal{P}_P(\alpha;\theta_P)$ and $\mathcal{P}_B(\alpha;\theta_B)$.

The following describes a joint training method for the foregoing plurality of neural networks.

S1. Pre-train a parameter $\theta_v$ of a fully-connected neural network $\mathfrak{B}^v(\alpha_k, K; \theta_v)$, where training steps are as follows:

S11. It is assumed that K terminals equally share total power, that is, $P_k^* = \dfrac{P_{\max}}{K}$ .

S12. Train the parameter $\theta_v$ based on $P_k^* = \dfrac{P_{\max}}{K}$ .

In an optional implementation, the first apparatus uses a supervised learning method to train the parameter $\theta_v$. To be specific, a dichotomy is used to solve $-\dfrac{1}{\theta}\ln IE\left\{e^{-\theta s_k(g_k,\alpha_k,P_k^*,B_k^*)}\right\} = S^E$ according to $P_k^* = \dfrac{P_{\max}}{K}$ , to obtain a training label B$^{v*}$. The loss function is defined as $IE_{\alpha k,K}\{((\hat{B}^v(\alpha_k,K;\theta_v)-B^{v*})^2)\}$, and $\hat{B}^v(\alpha_k,K;\theta_v)$ is an output of the FNN. Then, the loss function is used to calculate a gradient of the FNN parameter $\theta_v$, to obtain a gradient of each parameter. Backpropagation is performed to update the parameter $\theta_v$, to implement FNN training, that is, to obtain z $\theta_v$=arg min$_{\theta v}$ $IE_{\alpha k,K}\{((\hat{B}^v(\alpha_k,K;\theta_v) - B^{v*})^2)\}$ through calculation.

In another optional implementation, the first apparatus uses an unsupervised learning method to train the parameter $\theta_v$. To be specific, a target function of FNN training is defined as a difference between a target throughput $S^E$ and an actual throughput $-\dfrac{1}{\theta}\ln IE_{g_k}\left\{e^{-\theta s_k(g_k,\alpha_k,P_k^*,B_k^*(\alpha_k,K;\theta_v))}\right\}$ , and then the difference is minimized by adjusting the FNN parameter $\theta_v$, to obtain $\theta_v = \arg\min_{\theta_v} IE_{\alpha_k,K}\left\{S^E + \dfrac{1}{\theta}\ln IE_{g_k}\left\{e^{-\theta s_k(g_k,\alpha_k,P_k^*,\hat{B}^v(\alpha_k,K;\theta_v))}\right\}\right\}$ .

S2. Jointly train the three strategy neural networks, to be specific, jointly train parameters $\theta_P$, $\theta_B$, and $\theta_\lambda$ of $\mathcal{P}_P(\alpha;\theta_P)$, $\mathcal{P}_B(\alpha;\theta_B)$, and $\mathcal{P}_\lambda(\alpha;\theta_\lambda)$, where a training process is as follows:

S21. Randomly initialize $\theta_P$, $\theta_B$, and $\theta_\lambda$.

S22. Input $\alpha_k$ and K into the fully-connected neural network $\hat{B}^v(\alpha_k, K;\theta_v)$ to obtain the scaling factor $\hat{B}_k^v$ , and scale an output $\hat{B}_k$ of $\mathcal{P}_B(\alpha;\theta_B)$ to obtain $\hat{B}_k - \hat{B}_k \hat{B}_k^v$ .

S23. Update the parameters $\theta_P$, $\theta_B$, and $\theta_\lambda$ by using a gradient backpropagation method and a random gradient descent method, that is,

$$\theta_P^{t+1} \leftarrow \theta_P^t - \gamma_P \sum_{(\alpha,g,K)\in S} \nabla_{\theta_P} \mathcal{P}_P(\alpha;\theta_P) \frac{\partial L^t(\alpha,\hat{P}_k,\hat{B}_k,\hat{\lambda}_k)}{\partial \hat{P}_k} \qquad (17)$$

$$\theta_B^{t+1} \leftarrow \theta_B^t - \gamma_B \sum_{(\alpha,g,K)\in S} \nabla_{\theta_B} \mathcal{P}_B(\alpha;\theta_B) \frac{\partial L^t(\alpha,\hat{P}_k,\hat{B}_k,\hat{\lambda}_k)}{\partial \hat{B}_k} \hat{B}_k^v \quad (18)$$

$$\theta_\lambda^{t+1} \leftarrow \theta_\lambda^t + \gamma_\lambda \sum_{(\alpha,g,K)\in S} \nabla_{\theta_\lambda} \mathcal{P}_\lambda(\alpha;\theta_\lambda) \frac{\partial L^t(\alpha,\hat{P}_k,\hat{B}_k,\hat{\lambda}_k)}{\partial \hat{\lambda}_k} \quad (19)$$

$\gamma_P$, $\gamma_B$, and $\gamma_\lambda$ are respectively learning efficiency of three neural networks $\mathcal{P}_P(\alpha;\theta_P)$, $\mathcal{P}_B(\alpha;\theta_B)$, and $\mathcal{P}_\lambda(\alpha;\theta_\lambda)$.

S3. Fix $\mathcal{P}_P(\alpha;\theta_P)$, $\mathcal{P}_B(\alpha;\theta_B)$, and $\mathcal{P}_\lambda(\alpha;\theta_\lambda)$, and train and update the fully-connected neural network

$\mathfrak{B}^v(\alpha_k, K; \theta_v)$ by using an output of $\mathcal{P}_P\ (\alpha; \theta_P)$ as a power allocation result. A training manner is similar to that of S1, and details are not described again.

S4. Repeat S2 and S3 until $\mathfrak{B}^v(\alpha_k, K; \theta_v)$ reaches a convergence condition, for example, when a quantity of iterations reaches a preset quantity, or network performance reaches a preset requirement, stop training the fully-connected neural network $\mathfrak{B}^v(\alpha_k, K; \theta_v)$.

Therefore, the power allocation strategy and the bandwidth allocation strategy in Formula (14) may be solved based on the three trained strategy neural networks and one FNN. The first apparatus uses $\mathcal{P}_P\ (\alpha; \theta_P)$, that is, the first machine learning model shown in FIG. 10, to solve the power allocation problem in Formula (14); and the first apparatus uses $\mathcal{P}_B\ (\alpha; \theta_B)$, that is, the first machine learning model shown in FIG. 12, to solve the bandwidth allocation problem in Formula (14). The scaling factor of the scaling layer in FIG. 12 is obtained based on the scaling factor calculation module shown in FIG. 13, and the FNN in the scaling factor calculation module is the FNN obtained through training.

The training process of the neural network may be performed offline, and therefore is not limited to being performed by the first apparatus or another device.

In this embodiment of this application, when the first apparatus is the network device, after obtaining the solution to the to-be-solved problem, the first apparatus sends the communication signal to the K terminals based on the solution. Optionally, when the first apparatus is the terminal device, or is a device other than the network device and the terminal device, after obtaining the solution to the to-be-solved problem, the first apparatus sends the solution to the to-be-solved problem to the network device, so that the network device sends the communication signal to the K terminals based on the solution.

It can be learned that, in this embodiment of this application, when the constraint condition includes that the quality of service of each of the K terminals falls within the second range, to minimize the total bandwidth of the K terminals during solving the allocation of the bandwidth at which the network device sends the communication signal to the K terminals, the obtained K-dimensional data is first inputted into the first processing module to obtain the K first intermediate solutions, then the K first intermediate solutions are inputted into the activation layer to obtain the K second intermediate solutions, then the K second intermediate solutions are inputted into the scaling factor layer, and the K second intermediate solutions are scaled by using the scaling factor layer to obtain the bandwidth of the K terminals. Dimensional generalization is performed on the K-dimensional data by using the activation layer and the scaling factor layer, so that a dimensional generalization capability of the K-dimensional data can be improved, and accuracy of the allocation of the bandwidth at which the network device sends the communication signal to the K terminals is improved.

It can be learned that, in the foregoing data processing method 300, an example in which the network device performs downlink transmission with the K single-antenna terminal devices is used, to solve allocation of the bandwidth and allocation of the power at which the network device sends the communication signal to the K terminals. During solving a problem about allocation of a bandwidth and a problem about allocation of power at which K terminals send communication signals to one network device when uplink transmission is performed between the network device and the K terminals, that is, a to-be-solved problem is about power and a bandwidth at which K terminals send communication signals to one network device when a total bandwidth at which the network device communicates with the K terminals is minimized, when a constraint condition includes that quality of service of communication between the network device and each of the K terminals falls within a second range, an implementation is similar to that of the foregoing data processing method 300 and details are not described herein again.

In embodiments of this application, when the constraint condition includes that quality of service of each of the K single-antenna terminals falls within the second range, to minimize the total bandwidth of the K single-antenna terminals during solving allocation of power and bandwidths of the K single-antenna terminals, the network device simulates two pieces of performance, that is, network availability and a bandwidth requirement, of a communication system when the data processing method 100 provided in embodiments of this application and some currently used solutions are used.

Simulation parameters of the communication system are: a distance $d_k$ between a $k^{th}$ terminal and the network device is between 50 meters and 250 meters, a path loss model of the $k^{th}$ terminal is 35.3+37.6log($d_k$), maximum transmit power of the network device is $P_{max}$ = 20W, a quantity of antennas of the network device is $N_t$ = 8 , noise power spectral density is $N_0$ = -173$dbm$ / $Hz$, transmission duration in each frame is $\tau$ = 0.05ms, a packet size is $u$ = 20 bytes, a decoding error probability of data is $\varepsilon_k$ = 5$e$ - 6, and a target maximum packet loss probability of the data is $\varepsilon_{max}$ = 1$e$ - 5.

Table 1 shows hyperparameter settings of three PENNs and an FNN.

**Table 1**

| Hyperparameter | Permutation equivalence neural network PENN | | | Fully-connected neural network FNN |
|---|---|---|---|---|
| | $\mathcal{P}_P\ (\alpha;\theta_P)$ | $\mathcal{P}_B\ (\alpha;\theta_B)$ | $\mathcal{P}_\lambda\ (\alpha;\theta_\lambda)$ | $\mathfrak{B}^v\ (\alpha_k,\ K;\theta_v)$ |
| Hidden layer | [4K] | | | [200, 100, 100, 50] |
| Hidden layer activation function | Leaky ReLU ( $y = x,\ x \geq 0;\ y = 0{,}01x, x < 0$ ) | | | |
| Output layer activation function | Softmax function | | | Softplus function |
| Learning rate | $\dfrac{0.01}{1+0.01t}$ | | | $\dfrac{0.01}{1+0.001t}$ |
| Batch size | 10 | | | 100 |
| Iteration round | 5000 | | | 2500 |

K is a quantity of single-antenna terminals, and $t$ is learning time.

When the fully-connected neural network $\mathfrak{B}^v(\alpha_k,\ K;\theta_v)$ is pre-trained, supervised learning is used for training. A sample is represented as $[(\alpha_k, K), B^{v*}]$, $\alpha_k$ is obtained based on a randomly generated terminal location passing through a path model, K is randomly generated from 10 to 200, and a total of 1000 pre-training samples are generated. When the neural networks $\mathcal{P}_P\ (\alpha;\theta_P)$, $\mathcal{P}_B\ (\alpha;\theta_B)$, and $\mathcal{P}_\lambda\ (\alpha;\theta_\lambda)$ are trained, unsupervised learning is used, a sample is represented as $(g,\alpha,K)$, and a small-scale channel $g$ is generated based on the Rayleigh distribution.

Manners of generating a training set, a validation set, and a test set are shown in Table 2.

**Table 2**

| | Value of K | Quantity of samples generated based on each K | Total quantity of samples |
|---|---|---|---|
| Training set | [10, 11, ..., 30] | 10 | 210 |
| Validation set | [10, 11, ..., 30] | 1 | 21 |
| Test set | [25, 50, 100, 200] | 100 | 400 |

The training set is a value range of K when the network device trains a first machine learning model. The validation set is a value range of K when the network device validates a trained first machine learning model. The test set is a value range of K when the network device tests the first machine learning model by using a value greater than that in the training set.

A value of K in the training set is [10, 11, ..., 30], indicating that K in the training set is any value in the [10, 11, ..., 30] set. The values of K in the validation set and in the test set are similar to the above. The quantity of samples generated based on each K is a quantity of samples generated when K is each value. For example, in the training set, when the value of K is 10, 10 samples are generated based on the value of K; and when the value of K is 30, 10 samples are generated based on the value of K. Therefore, a total quantity of samples generated based on the value of K is 210. For another example, in the test set, when the value of K is 25, 100 samples are generated based on the value of K; when the value of K is 50, 100 samples are generated based on the value of K; when the value of K is 100, 100 samples are generated based on the value of K; and when the value of K is 200, 100 samples are generated based on the value of K. Therefore, in the test set, a total quantity of samples generated based on the value of K is 400.

Performance indexes simulated in embodiments of this application are the network availability and the bandwidth requirement. The network availability $A_K$ may be represented as:

$$A_K \triangleq \frac{1}{K\left|N_K\right|} \sum_{(g,\alpha)\in N_K} \sum_{k=1}^{K} I(\varepsilon_k < \varepsilon_{\max}) \quad (20)$$

$N_K$ is a set of all samples having a dimension of K in the test set, $|N_K|$ is a quantity of elements in the set, and $I(\cdot)$ is a characteristic function. The network availability index refers to a ratio of a quantity of terminals that can meet a packet loss rate requirement to a total quantity of terminals on the network. A larger network availability index indicates better system performance.

The bandwidth requirement $W_K^r$ may be represented as:

$$W_K^r \triangleq \frac{1}{K|\mathrm{N}_K|} \sum_{(g,\alpha)\in \mathrm{N}_K} \sum_{k=1}^{K} \hat{B}_k \quad (21)$$

$\hat{B}_k$ is bandwidth allocation of the $k$th terminal. The bandwidth requirement indicates a total bandwidth used by all terminals.

In embodiments of this application, a simulation result obtained based on the foregoing simulation condition is shown in Table 3.

**Table 3**

| Different methods | K=20 | | K=50 | | K=100 | | K=200 | |
|---|---|---|---|---|---|---|---|---|
| | $A_k$ | $W_K^r$ | $A_k$ | $W_K^r$ | $A_k$ | $W_K^r$ | $A_K$ | $W_K^r$ |
| P-PENN | 1.0 | 3.80 | 1.00 | 10.76 | 1.00 | 23.83 | 1.00 | 54.44 |
| M-PENN[10] | 0.03 | 3.56 | 0.00 | 8.88 | 0.00 | 17.70 | 0.00 | 35.40 |
| M-PENN[200] | 1.00 | 5.47 | 1.00 | 13.47 | 1.00 | 27.19 | 1.00 | 54.35 |
| FNN | 0.98 | 8.59 | 0.82 | 17.91 | 0.84 | 33.05 | 1.00 | 54.49 |

The P-PENN is the first machine learning model in the data processing method 300 provided in embodiments of this application. The M-PENN[10] is a PENN that is currently pre-trained, and is a model obtained through training in a scenario of K=10 terminals. The M-PENN[200] is a PENN that is currently pre-trained, and is a model obtained through training in a scenario of K=200 terminals. The FNN is a fully-connected neural network that is currently pre-trained.

It can be learned from Table 3 that, although the first machine learning model in the data processing method 300 is obtained through training in a scenario in which $K$ is 10 to 30 terminals, when the first machine learning model is used for more terminals, that is, when there are 50, 100, and 200 terminals, the network availability $A_K$ is 1, and the bandwidth requirement $W_K^r$ is relatively small compared with that in another solution. In other words, for a large quantity of terminals, all terminals can meet the packet loss rate requirement based on the first machine learning model in the data processing method 300, and the bandwidth requirement is small.

When the network device uses the M-PENN[10], although the bandwidth requirement of the terminal is less than that when the first machine learning model in the data processing method 300 is used, when there are a plurality of terminals, network availability is approximated to 0, that is, network availability is extremely poor, and the M-PENN[10] cannot be used in an actual scenario. When the network device uses the M-PENN[200], when there are a plurality of terminals, it can be ensured that the network availability is 1. However, a bandwidth requirement is greater than that when the first machine learning model in the data processing method 300 is used. Therefore, more resources need to be used. When the network device uses the FNN, more bandwidths are used than that used when the first machine learning model in the data processing method 300 is used, and it still cannot be ensured that the network availability is 1.

Therefore, in conclusion, when the network device uses the data processing method 300, and the first machine learning model obtained through pre-training when a quantity of terminals is small is used in a scenario in which a quantity of terminals is large, the network availability can still be ensured under a small bandwidth requirement. In other words, when the network device uses the data processing method 300 to solve resource allocation, accuracy of an obtained resource allocation result is high, and system performance can be ensured.

IV Apparatus embodiment

To implement functions in the method provided in the foregoing embodiments of this application, the first apparatus may include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

As shown in FIG. 14, an embodiment of this application provides a communication apparatus 1400. The communication apparatus 1400 may be a component (for example, an integrated circuit or a chip) of the first apparatus, or may be a component (for example, an integrated circuit or a chip) of the first apparatus. Alternatively, the communication apparatus 1400 may be another communication unit, configured to implement the method in method embodiments of this application. The communication apparatus 1400 may include a communication unit 1401 and a processing unit 1402. Optionally, the communication apparatus may further include a storage unit 1403.

In a possible design, one or more units in FIG. 14 may be implemented by one or more processors, or implemented by one or more processors and memories, or implemented by one or more processors and transceivers, or implemented by one or more processors, memories, and transceivers. This is not limited in embodiments of this application. The processor, the memory, and the transceiver may be disposed separately, or may be integrated.

The communication apparatus 1400 has a function of implementing the first apparatus described in embodiments of this application. For example, the communication apparatus 1400 includes a corresponding module, unit, or means (means) used by the first apparatus to perform the first apparatus-related steps described in embodiments of this application. The function, unit, or means (means) may be implemented by using software, or may be implemented by hardware, or may be implemented by the hardware executing corresponding software, or may be implemented by combining the software and the hardware. For details, refer to the corresponding descriptions in the foregoing corresponding method embodiment.

In a possible design, a communication apparatus 1400 may include a processing unit 1402 and a communication unit 1401. The communication unit 1401 is configured to receive and send data/signaling.

The processing unit 1402 is configured to obtain K-dimensional data.

The processing unit 1402 is further configured to input the K-dimensional data into a first machine learning model, to obtain a solution to a to-be-solved problem, where the first machine learning model includes a first processing module and a second processing module.

The second processing module is determined based on a constraint condition of the to-be-solved problem; the second processing module is configured to perform dimensional generalization on the K-dimensional data; the first processing module is obtained through training based on m-dimensional data; a value of m is irrelevant to a value of K; and K and m are positive integers.

In an optional implementation, the to-be-solved problem does not have a dimensional generalization characteristic.

In an optional implementation, when inputting the K-dimensional data into the first machine learning model, to obtain the solution to the to-be-solved problem, the processing unit 1402 is specifically configured to:

input the K-dimensional data into the first processing module, to obtain K first intermediate solutions; and
input the K first intermediate solutions into the second processing module, to obtain the solution to the to-be-solved problem.

In an optional implementation, the to-be-solved problem is about power at which one network device sends a communication signal to K terminals when a total bandwidth at which the network device communicates with the K terminals is minimized. The constraint condition includes that total power at which the network device sends the communication signal to the K terminals falls within a first range.

In another optional implementation, the to-be-solved problem is about power at which K terminals send communication signals to one network device when a total bandwidth at which the K terminals communicate with the network device is minimized. The constraint condition includes that total power at which the K terminals send the communication signals to the network device falls within a third range.

In an optional implementation, the second processing module includes a normalized exponential function activation layer.

In another optional implementation, the to-be-solved problem is about a bandwidth at which one network device communicates with K terminals when a total bandwidth at which the network device communicates with the K terminals is minimized. The constraint condition includes that quality of service of communication between the network device and each of the K terminals falls within a second range.

In an optional implementation, the second processing module includes the activation layer and a scaling factor layer. A $k^{th}$ scaling factor in the scaling factor layer is obtained by inputting a $k^{th}$ piece of data and K into a scaling factor calculation module; and k is a positive integer less than or equal to K.

In an optional implementation, when inputting the K first intermediate solutions into the second processing module, to obtain the solution to the to-be-solved problem, the processing unit 1402 is specifically configured to:

input the K first intermediate solutions into the activation layer, to obtain K second intermediate solutions; and
input the K second intermediate solutions into the scaling factor layer, to obtain the solution to the to-be-solved problem.

In an optional implementation, the K-dimensional data is channel gains between the network device and the K terminals.

In an optional implementation, the first processing module is a permutation equivalence neural network or a graph neural network having a permutation equivalence characteristic.

This embodiment of this application and the foregoing method embodiment are based on the same concept, and bring a same technical effect. For a specific principle, refer to the description of the foregoing embodiment. Details are not described again.

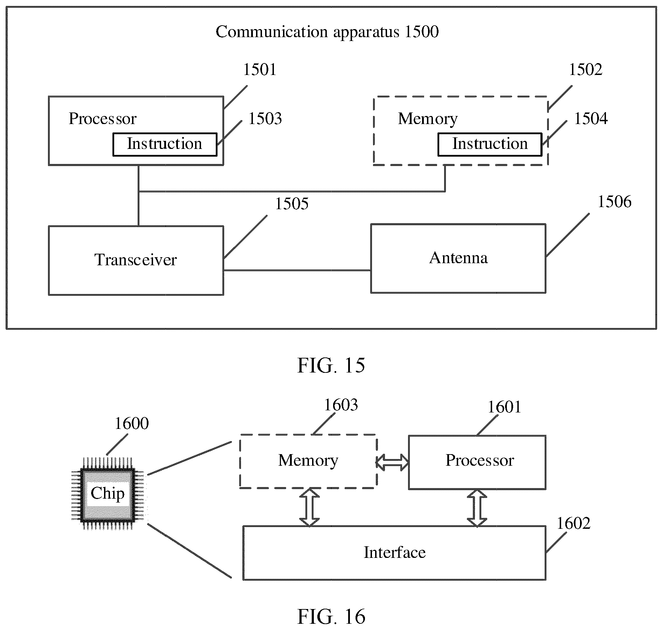

An embodiment of this application further provides a communication apparatus 1500. FIG. 15 is a diagram of a structure of the communication apparatus 1500. The communication apparatus 1500 may be a first apparatus, or may be a chip, a chip system, a processor, or the like that supports the first apparatus in implementing the foregoing method. The apparatus may be configured to implement the method described in the foregoing method embodiment. For details, refer to the descriptions in the foregoing method embodiment.

The communication apparatus 1500 may include one or more processors 1501. The processor 1501 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to control the communication apparatus (for example, a base station, a baseband chip, a terminal, a terminal chip, a distributed unit (distributed unit, DU), or a central unit (central unit, CU)), execute a software program, and process data of a software program.

Optionally, the communication apparatus 1500 may include one or more memories 1502. The memory may store instructions 1504, and the instructions may be run on the processor 1501, so that the communication apparatus 1500 performs the method described in the foregoing method embodiments. Optionally, the memory 1502 may further store data. The processor 1501 and the memory 1502 may be disposed separately, or may be integrated together.

The memory 1502 may include but is not limited to a non-volatile memory such as a hard disk drive (hard disk drive, HDD) or a solid-state drive (solid-state drive, SSD), a random access memory (Random Access Memory, RAM), an erasable programmable ROM (Erasable Programmable ROM, EPROM), a ROM, or a portable compact disc read-only memory (Compact Disc Read-Only Memory, CD-ROM).

Optionally, the communication apparatus 1500 may further include a transceiver 1505 and an antenna 1506. The transceiver 1505 may be referred to as a transceiver unit, a transceiver machine, a transceiver circuit, or the like, and is configured to implement a transceiver function. The transceiver 1505 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1500 is the first apparatus. The processor 1501 is configured to perform S101 and S102 in the data processing method 100, perform S201, S202, and S203 in the data processing method 200, and perform S301, S302, S303, and S304 in the data processing method 300.

In another possible design, the processor 1501 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1501 may store instructions 1503. When the instructions 1503 are run on the processor 1501, the communication apparatus 1500 may be enabled to perform the method described in the foregoing method embodiments. The instructions 1503 may be fixed in the processor 1501. In this case, the processor 1501 may be implemented by hardware.

In still another possible design, the communication apparatus 1500 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an nMetal-oxide-semiconductor (nMetal-oxide-semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be the first apparatus. However, a scope of the communication apparatus described in embodiments of this application is not limited thereto, and a structure of the communication apparatus may not be limited to FIG. 15. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may also include a storage component configured to store data and an instruction;
(3) ASIC, such as a modulator (modulator); and
(4) a module that can be embedded in another device.

For a case in which the communication apparatus is a chip or a chip system, refer to a diagram of a structure of a chip shown in FIG. 16. The chip 1600 shown in FIG. 16 includes a processor 1601 and an interface 1602. There may be one or more processors 1601, and there may be a plurality of interfaces 1602. The processor 1601 may be a logic circuit, and the interface 1602 may be an input/output interface, an input interface, or an output interface. The chip 1600 may further include a memory 1603.

In a design, when the chip is configured to implement a function of the second communication apparatus in embodiments of this application, the interface 1602 is configured to perform output or receiving.

The processor 1601 is configured to obtain K-dimensional data.

The processor 1601 is further configured to input the K-dimensional data into a first machine learning model, to obtain a solution to a to-be-solved problem, where the first machine learning model includes a first processing module and a second processing module.

The second processing module is determined based on a constraint condition of the to-be-solved problem; the second processing module is configured to perform dimensional generalization on the K-dimensional data; the first processing module is obtained through training based on m-dimensional data; a value of m is irrelevant to a value of K; and K and m are positive integers.

In embodiments of this application, the communication apparatus 1500 and the chip 1600 may further perform the implementation of the communication apparatus 1400. A person skilled in the art may further understand that various illustrative logical blocks (illustrative logic blocks) and steps (steps) that are listed in embodiments of this application may be implemented by using electronic hardware, computer software, or a combination thereof. Whether the functions are implemented by using the hardware or the software depends on particular applications and a design requirement of the entire system. A person skilled in the art may use various methods to implement the described functions for each particular application, but it should not be considered that the implementation goes beyond the scope of embodiments of this application.

This embodiment of this application and the method embodiments shown in the data processing method 100 to the data processing method 300 are based on the same concept, and bring a same technical effect. For a specific principle, refer to the descriptions of the foregoing embodiments shown in the data processing method 100 to the data processing method 300. Details are not described again.

This application further provides a computer-readable storage medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

This application further provides a computer program. When the computer program is run on a computer, a function in any one of the foregoing method embodiments is implemented.

This application further provides a communication system. The system includes one or more network devices and one or more terminal devices. In another possible design, the system may further include another device that interacts with the network device and the terminal device in the solutions provided in this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A data processing method, wherein the method comprises:

   obtaining K-dimensional data; and
   inputting the K-dimensional data into a first machine learning model, to obtain a solution to a to-be-solved problem, wherein the first machine learning model comprises a first processing module and a second processing module, wherein
   the second processing module is determined based on a constraint condition of the to-be-solved problem; the second processing module is configured to perform dimensional generalization on the K-dimensional data; the first processing module is obtained through training based on m-dimensional data; a value of m is irrelevant to a value of K; and K and m are positive integers.

2. The method according to claim 1, wherein the obtaining K-dimensional data comprises:

   obtaining the K-dimensional data through channel estimation; or
   receiving the K-dimensional data from a terminal, wherein the K-dimensional data is obtained by the terminal through channel estimation.

3. The method according to claim 1 or 2, wherein the to-be-solved problem does not have a dimensional generalization characteristic.

4. The method according to any one of claims 1 to 3, wherein the inputting the K-dimensional data into a first machine learning model, to obtain a solution to a to-be-solved problem comprises:

   inputting the K-dimensional data into the first processing module, to obtain K first intermediate solutions; and
   inputting the K first intermediate solutions into the second processing module, to obtain the solution to the to-be-solved problem.

5. The method according to any one of claims 1 to 4, wherein the to-be-solved problem is about power at which one network device sends a communication signal to K terminals when a total bandwidth at which the network device communicates with the K terminals is minimized; and
   the constraint condition comprises that total power at which the network device sends the communication signal to the K terminals falls within a first range.

6. The method according to any one of claims 1 to 4, wherein the to-be-solved problem is about power at which K terminals send communication signals to one network device when a total bandwidth at which the K terminals communicate with the network device is minimized; and
   the constraint condition comprises that total power at which the K terminals send the communication signals to the network device falls within a third range.

7. The method according to claim 5 or 6, wherein the second processing module comprises a normalized exponential function activation layer.

8. The method according to any one of claims 1 to 4, wherein the to-be-solved problem is about a bandwidth at which one network device communicates with K terminals when a total bandwidth at which the network device communicates with the K terminals is minimized; and
the constraint condition comprises that quality of service of communication between the network device and each of the K terminals falls within a second range.

9. The method according to claim 8, wherein the second processing module comprises an activation layer and a scaling factor layer; and
a $k^{th}$ scaling factor in the scaling factor layer is obtained by inputting a $k^{th}$ piece of data and K into a scaling factor calculation module; and k is a positive integer less than or equal to K.

10. The method according to claim 9, wherein the inputting the K first intermediate solutions into the second processing module, to obtain the solution to the to-be-solved problem comprises:

inputting the K first intermediate solutions into the activation layer, to obtain K second intermediate solutions; and
inputting the K second intermediate solutions into the scaling factor layer, to obtain the solution to the to-be-solved problem.

11. The method according to any one of claims 5 to 10, wherein the K-dimensional data is channel gains between the network device and the K terminals.

12. The method according to any one of claims 1 to 11, wherein the first processing module is a permutation equivalence neural network or a graph neural network having a permutation equivalence characteristic.

13. A communication apparatus, wherein the apparatus comprises a communication unit and a processing unit, and the communication unit is configured to receive and send data/signaling;

the processing unit is configured to obtain K-dimensional data;
the processing unit is further configured to input the K-dimensional data into a first machine learning model, to obtain a solution to a to-be-solved problem, wherein the first machine learning model comprises a first processing module and a second processing module; and
the second processing module is determined based on a constraint condition of the to-be-solved problem; the second processing module is configured to perform dimensional generalization on the K-dimensional data; the first processing module is obtained through training based on m-dimensional data; a value of m is irrelevant to a value of K; and K and m are positive integers.

14. The apparatus according to claim 13, wherein when obtaining the K-dimensional data, the processing unit is specifically configured to:

obtain the K-dimensional data through channel estimation; or
receive the K-dimensional data from a terminal, wherein the K-dimensional data is obtained by the terminal through channel estimation.

15. The apparatus according to claim 13 or 14, wherein the to-be-solved problem does not have a dimensional generalization characteristic.

16. The apparatus according to any one of claims 13 to 15, wherein when inputting the K-dimensional data into the first machine learning model, to obtain the solution to the to-be-solved problem, the processing unit is specifically configured to:

input the K-dimensional data into the first processing module, to obtain K first intermediate solutions; and
input the K first intermediate solutions into the second processing module, to obtain the solution to the to-be-solved problem.

17. The apparatus according to any one of claims 13 to 16, wherein the to-be-solved problem is about power at which one network device sends a communication signal to K terminals when a total bandwidth at which the network device communicates with the K terminals is minimized; and
the constraint condition comprises that total power at which the network device sends the communication signal to the K terminals falls within a first range.

18. The apparatus according to any one of claims 13 to 16, wherein the to-be-solved problem is about power at which K terminals send communication signals to one network device when a total bandwidth at which the K terminals communicate with the network device is minimized; and
the constraint condition comprises that total power at which the K terminals send the communication signals to the network device falls within a third range.

19. The apparatus according to claim 17 or 18, wherein the second processing module comprises a normalized exponential function activation layer.

20. The apparatus according to any one of claims 13 to 16, wherein the to-be-solved problem is about a bandwidth at which one network device communicates with K terminals when a total bandwidth at which the network device communicates with the K terminals is minimized; and
the constraint condition comprises that quality of service of communication between the network device and each of the K terminals falls within a second range.

21. The apparatus according to claim 20, wherein the second processing module comprises an activation layer and a scaling factor layer; and
a $k^{th}$ scaling factor in the scaling factor layer is obtained by inputting a $k^{th}$ piece of data and K into a scaling factor calculation module; and k is a positive integer less than or equal to K.

22. The apparatus according to claim 21, wherein when inputting the K first intermediate solutions into the second processing module, to obtain the solution to the to-be-solved problem, the processing unit is specifically configured to:

    input the K first intermediate solutions into the activation layer, to obtain K second intermediate solutions; and
    input the K second intermediate solutions into the scaling factor layer, to obtain the solution to the to-be-solved problem.

23. The apparatus according to any one of claims 17 to 22, wherein the K-dimensional data is channel gains between the network device and the K terminals.

24. The apparatus according to any one of claims 13 to 23, wherein the first processing module is a permutation equivalence neural network or a graph neural network having a permutation equivalence characteristic.

25. A communication apparatus, comprising a processor and a transceiver, wherein the transceiver is configured to communicate with another communication apparatus, and the processor is configured to run a program, to enable the communication apparatus to implement the method according to any one of claims 1 to 12.

26. The apparatus according to claim 25, further comprising a memory configured to store the program.

27. A computer-readable storage medium, wherein the computer-readable storage medium is configured to store instructions, and when the instructions are run on a computer, the method according to any one of claims 1 to 12 is performed.

28. A computer program product comprising instructions, wherein the method according to any one of claims 1 to 12 is performed when the computer program product runs on a computer.

Network device

Terminal device

Terminal device

FIG. 1

$b$

$w$

$X_1$

$X_2$

$X_3$

$X_4$

$Y_1$

$Y_2$

$Y_3$

$Y_4$

$Y_5$

$Y_6$

Input
layer

Hidden
layer

Output
layer

FIG. 2

Loss function

Start point

Optimal point

Neural network parameter

FIG. 3

FIG. 4

FIG. 5

FIG. 6

Data processing method 100

S101

A first apparatus obtains K-dimensional data

S102

The first apparatus inputs the K-dimensional data into a first machine learning model, to obtain a solution to a to-be-solved problem, where the first machine learning model includes a first processing module and a second processing module, where the second processing module is determined based on a constraint condition of the to-be-solved problem; the second processing module is configured to perform dimensional generalization on the K-dimensional data; the first processing module is obtained through training based on m-dimensional data; and a value of m is irrelevant to a value of K

FIG. 7

FIG. 8

K-dimensional data

First processing module (permutation equivalence neural network PENN)

$x_1$ ... ... $x_K$

$h_1^1$ ... ... $h_K^1$

$h_1^2$ ... ... $h_K^2$

$h_1^L$ ... ... $h_K^L$

$y_1$ ... ... $y_K$

K first intermediate solutions

Second processing module

Solution to a to-be-solved problem

Data processing method 200

| Obtain K-dimensional data | S201 |

| Input the K-dimensional data into a first processing module, to obtain K first intermediate solutions | S202 |

| Obtain a solution to a to-be-solved problem, where the solution to the to-be-solved problem is obtained by inputting the K first intermediate solutions into a second processing module | S203 |

FIG. 9

K-dimensional data

$g_1$ →
⋮
$g_K$ →

PENN

First processing module

K first intermediate solutions

$\hat{P}_1^{'}$
⋮
$\hat{P}_K^{'}$

Normalized exponential activation layer

Second processing module

Solution to a to-be-solved problem

$\hat{P}_1$
⋮
$\hat{P}_K$

FIG. 10

Data processing method 300                                                                      S301

| Obtain K-dimensional data |
|---|

S302

| Input the K-dimensional data into a first processing module, to obtain K first intermediate solutions |
|---|

S303

| Obtain K second intermediate solutions, where the K second intermediate solutions are obtained by inputting the K first intermediate solutions into an activation layer |
|---|

S304

| Obtain a solution to a to-be-solved problem, where the solution to the to-be-solved problem is obtained by inputting the K second intermediate solutions into a scaling factor layer |
|---|

FIG. 11

FIG. 12

Fully-connected neural
network FNN

$\alpha_K \rightarrow$

$K \rightarrow$

Activation layer
(softplus function)

$\rightarrow \hat{B}_k^v$

Scaling factor calculation
module

FIG. 13

Communication apparatus 1400

1401

Communication unit

1402

Processing unit

1403

Storage unit

FIG. 14

Communication apparatus 1500

Processor 1501

Instruction 1503

Memory 1502

Instruction 1504

Transceiver 1505

Antenna 1506

FIG. 15

1600

Chip

Memory 1603

Processor 1601

Interface 1602

FIG. 16

## INTERNATIONAL SEARCH REPORT

| International application No. |
|---|
| **PCT/CN2023/084530** |

| **A. CLASSIFICATION OF SUBJECT MATTER** |
|---|
| G06N3/08(2023.01)i |
| According to International Patent Classification (IPC) or to both national classification and IPC |

| **B. FIELDS SEARCHED** |
|---|
| Minimum documentation searched (classification system followed by classification symbols) |
| IPC: G06N |
| Documentation searched other than minimum documentation to the extent that such documents are included in the fields searched |
| Electronic data base consulted during the international search (name of data base and, where practicable, search terms used) |
| CNABS, CNTXT, CNKI, DWPI, ENTXT, ENTXTC: 通信, 功率, 带宽, 机器学习, 泛化, 信道增益, 设备, 数量, communication, power, bandwidth, machine learning, generalization, channel gain, device, number |

| **C.** | **DOCUMENTS CONSIDERED TO BE RELEVANT** | |
|---|---|---|
| Category* | Citation of document, with indication, where appropriate, of the relevant passages | Relevant to claim No. |
| A | CN 111915060 A (HUAWEI TECHNOLOGIES CO., LTD.) 10 November 2020 (2020-11-10) entire document | 1-28 |
| A | CN 113965233 A (SOUTHEAST UNIVERSITY) 21 January 2022 (2022-01-21) entire document | 1-28 |
| A | KR 20220013906 A (ELECTRONICS & TELECOMMUNICATIONS RES INST; NAT UNIV PUKYONG IND UNIV COOP FOUND; INDUSTRIAL COOPERATION FOUNDATION JEONBUK NATIONAL UNIV;) 04 February 2022 (2022-02-04) entire document | 1-28 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 June 2023** | **19 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

| International application No. |
| --- |
| **PCT/CN2023/084530** |

| Patent document cited in search report | | | Publication date (day/month/year) | Patent family member(s) | | | Publication date (day/month/year) |
| --- | --- | --- | --- | --- | --- | --- | --- |
| CN | 111915060 | A | 10 November 2020 | None | | | |
| CN | 113965233 | A | 21 January 2022 | CN | 113965233 | B | 26 July 2022 |
| KR | 20220013906 | A | 04 February 2022 | KR | 102510513 | B1 | 16 March 2023 |
| | | | | US | 2022029665 | A1 | 27 January 2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210336391